(19) **Europäisches Patentamt / European Patent Office / Office européen des brevets**

(11) **EP 4 597 867 A1**

(12) # EUROPEAN PATENT APPLICATION
published in accordance with Art. 153(4) EPC

(43) Date of publication:
06.08.2025  Bulletin 2025/32

(21) Application number: 23872934.7

(22) Date of filing: 20.09.2023

(51) International Patent Classification (IPC):
*H04B 7/06* (2006.01)    *H04B 17/373* (2015.01)
*H04W 72/23* (2023.01)    *H04W 72/04* (2023.01)
*H04W 24/08* (2009.01)    *H04L 5/00* (2006.01)

(52) Cooperative Patent Classification (CPC):
H04B 7/06; H04B 17/373; H04L 5/00; H04W 24/08;
H04W 72/04; H04W 72/23

(86) International application number:
PCT/KR2023/014315

(87) International publication number:
WO 2024/071817 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  26.09.2022  KR 20220121992

(71) Applicant: LG Electronics Inc.
Yeongdeungpo-gu
Seoul 07336 (KR)

(72) Inventors:
• KIM, Hyungtae
  Seoul 06772 (KR)
• KANG, Jiwon
  Seoul 06772 (KR)

(74) Representative: Plasseraud IP
104 Rue de Richelieu
CS92104
75080 Paris Cedex 02 (FR)

(54) **METHOD AND DEVICE FOR TRANSMITTING OR RECEIVING CHANNEL STATE INFORMATION IN WIRELESS COMMUNICATION SYSTEM**

(57)    Disclosed are a method and a device for transmitting or receiving channel state information in a wireless communication system. A method according to an embodiment of the present disclosure may comprise the steps of: receiving configuration information related to CSI from a base station, wherein the configuration information includes information on multiple CSI-RS burst patterns, and each of the multiple CSI-RS burst patterns includes one or more CSI-RS resources; and receiving a CSI-RS in the multiple CSI-RS burst patterns from the base station; and transmitting the CSI to the base station.

FIG.20

```
Receive configuration information
related to channel state information      S2001

Receive CSI-RS in a plurality of
CSI-RS burst patterns                     S2002

Transmit channel state information        S2003
```

**Description**

[Technical Field]

The present disclosure relates to a wireless communication system, and in more detail, relates to a method and an apparatus of transmitting and receiving channel state information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving CSI.

In addition, an additional technical object of the present disclosure is to provide a method and an apparatus for determining a pattern for channel measurement resources and/or interference measurement resources based on which channel and/or interference measurement is derived, to calculate CSI.

In addition, an additional technical object of the present disclosure is to provide a method and an apparatus for transmitting and receiving channel state information reflecting channel/interference for multiple time instances.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station, configuration information related to channel state information (CSI), wherein the configuration information includes information on a plurality of CSI-RS (CSI-reference signal) burst patterns, and each of the plurality of CSI-RS burst patterns includes one or more CSI-RS resources; receiving, from the base station, a CSI-RS from the plurality of CSI-RS burst patterns, and transmitting CSI to the base station. The CSI may be calculated based on multiple time instances using channel and/or interference measurement for a CSI-RS burst pattern determined among the plurality of CSI-RS burst patterns, the CSI may include an indicator indicating the determined CSI-RS burst pattern, and the multiple time instances for calculating the CSI may be determined based on the determined CSI-RS burst pattern.

A method method performed by a base station in a wireless communication system according to an additional aspect of the present disclosure may include: transmitting, to a user equipment (UE), configuration information related to channel state information (CSI), wherein the configuration information includes information on a plurality of CSI-RS (CSI-reference signal) burst patterns, and each of the plurality of CSI-RS burst patterns includes one or more CSI-RS resources; transmitting, to the UE, a CSI-RS from the plurality of CSI-RS burst patterns, and receiving CSI from the UE. The CSI may be calculated based on multiple time instances using channel and/or interference measurement for a CSI-RS burst pattern determined among the plurality of CSI-RS burst patterns, the CSI may include an indicator indicating the determined CSI-RS burst pattern, and the multiple time instances for calculating the CSI may be determined based on the determined CSI-RS burst pattern.

[Technical Effects]

According to an embodiment of the present disclosure, a pattern for the best channel measurement resources and/or interference measurement resources based on which channel and/or interference measurement is derived can be determined to transmit and receive CSI.

In addition, according to an embodiment of the present disclosure, downlink transmission performance can be improved by calculating CSI reflecting a channel for multiple time instances.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a classification of artificial intelligence.

FIG. 8 illustrates a feed-forward neural network.

FIG. 9 illustrates a recurrent neural network.

FIG. 10 illustrates a convolutional neural network.

FIG. 11 illustrates an auto encoder.

FIG. 12 illustrates a functional framework for an AI operation.

FIG. 13 is a diagram illustrating split AI inference.

FIG. 14 illustrates an application of a functional framework in a wireless communication system.

FIG. 15 illustrates an application of a functional framework in a wireless communication system.

FIG. 16 illustrates an application of a functional framework in a wireless communication system.

FIG. 17 illustrates a PMI for multiple time instances not earlier than a CSI reference resource in a wireless communication system to which the present disclosure can be applied.

FIG. 18 illustrates a PMI for multiple time instances not later than a CSI reference resource in a wireless communication system to which the present disclosure can be applied.

FIG. 19 illustrates a signaling procedure between a network and a UE for a method for transmitting and receiving channel state information according to an embodiment of the present disclosure.

FIG. 20 is a diagram illustrating operations of a UE for a method for transmitting and receiving channel state information according to an embodiment of the present disclosure.

FIG. 21 is a diagram illustrating operations of a base station for a method for transmitting and receiving channel state information according to an embodiment of the present disclosure.

FIG. 22 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

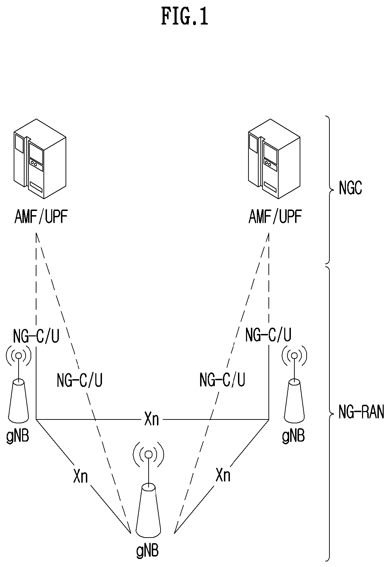

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

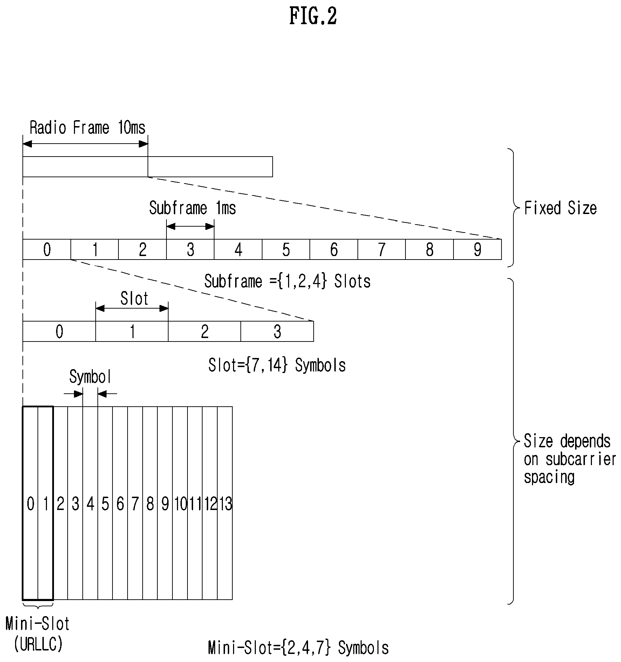

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_r/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,μ}$ | $N_{slot}^{subframe,μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,μ}$ | $N_{slot}^{subframe,μ}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

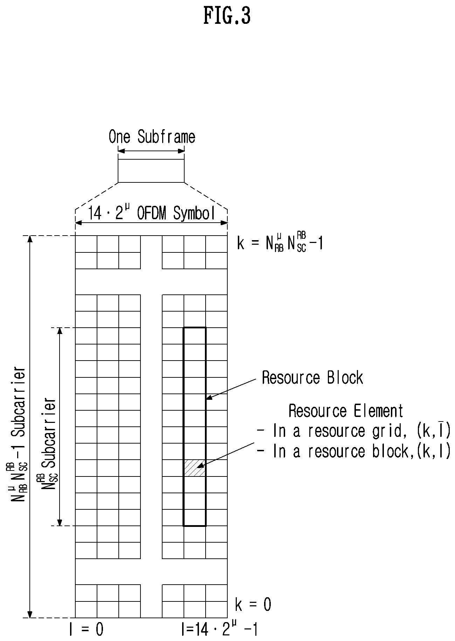

FIG. 3 illustrates a resource grid in a wireless communication system to which the present disclosure may be applied.

In reference to FIG. 3, it is illustratively described that a resource grid is configured with $N_{RB}^{μ}N_{sc}^{RB}$ subcarriers in a frequency domain and one subframe is configured with $14·2^{μ}$ OFDM symbols, but it is not limited thereto. In an NR system, a transmitted signal is described by OFDM symbols of $2^{μ}N_{symb}^{(μ)}$ and one or more resource grids configured with $N_{RB}^{μ}N_{sc}^{RB}$ subcarriers. Here, $N_{RB}^{μ}≤N_{RB}^{max,μ}$. The $N_{RB}^{max,μ}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,..., N_{RB}^{μ}N_{sc}^{RB}-1$ is an index in a frequency domain and $l'=0,..., 2^{μ}N_{symb}^{(μ)}-1$ refers to a position of a symbol in a subframe. When referring to a resource element in a slot, an index pair (k,l) is used. Here, $l=0,..., N_{symb}^{μ}-1$. A resource element (k,l') for μ and an antenna port p corresponds to a complex value, $a_{k,l'}^{(p,μ)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{μ}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

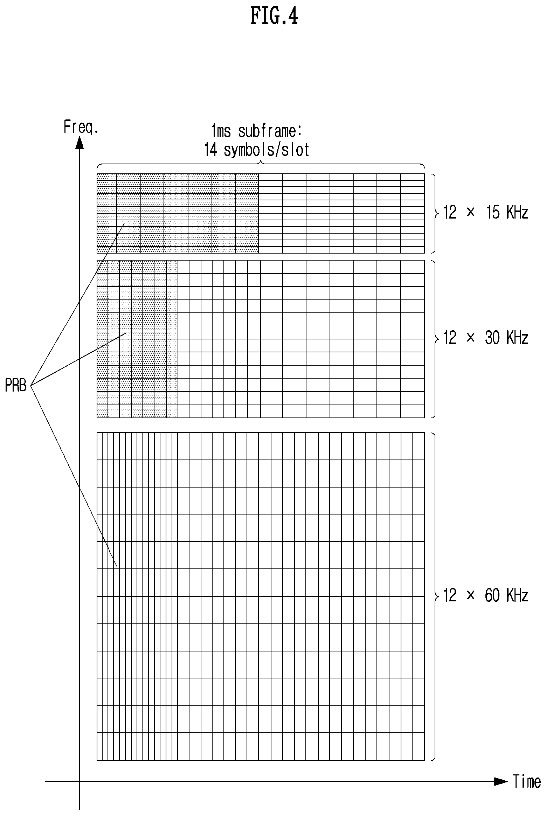

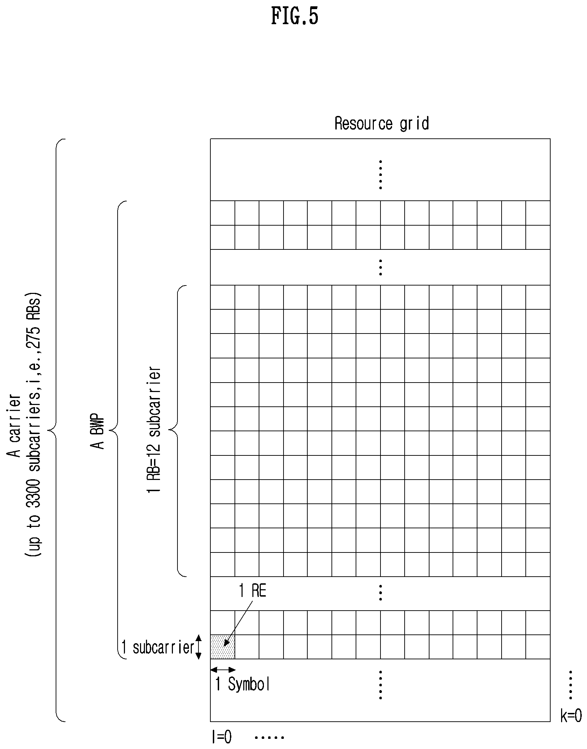

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

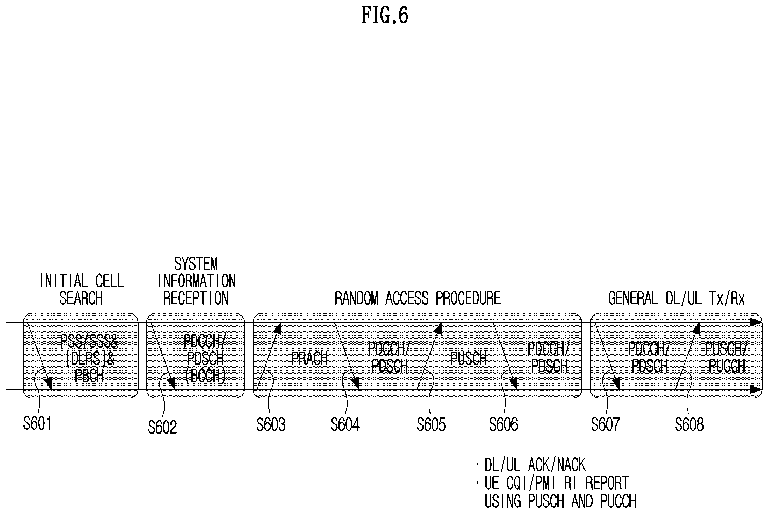

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

The AI-related descriptions and operations described below can be applied in combination with the methods proposed in the present disclosure described later, or can be supplemented to clarify the technical features of the methods proposed in the present disclosure.

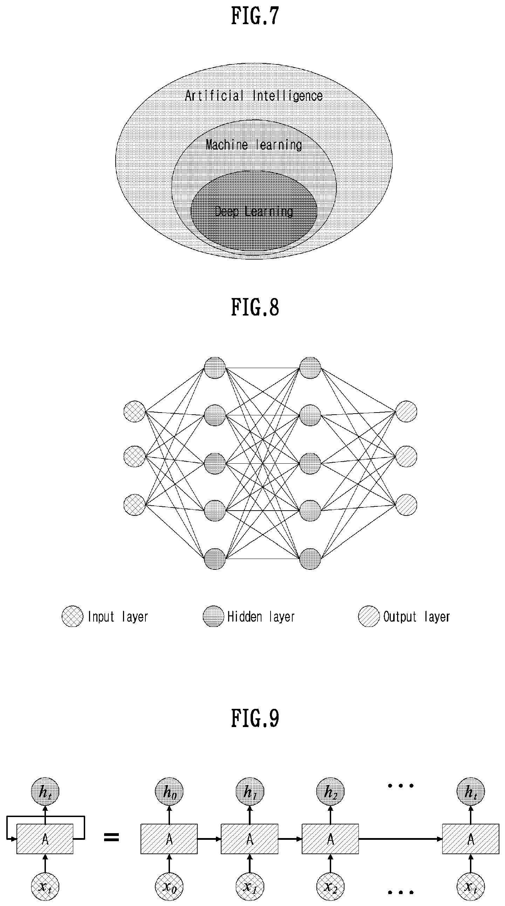

FIG. 7 illustrates a classification of artificial intelligence.

Referring to FIG. 7, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work. For offline learning, the system does not learn incrementally, the learning is performed using all available collected data and applied to the system without further learning. If learning about new data is necessary, learning can begin again using all new data.

b) Online Learning

This refers to a method of gradually improving performance by incrementally additional learning with data generated in real time, recently, by taking advantage of the fact that data that can be used for learning continues to be generated through the Internet, Learning is performed in real time for each (bundle) of specific data collected online, allowing the system to quickly adapt to changing data.

Only online learning is used to build an AI system, so learning may be performed only with data generated in real time, or after offline learning is performed using a predetermined data set, additional learning may be performed using additional real-time data (online + offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.
- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.

Hereinafter, representative models of deep learning will be exemplified.

FIG. 8 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

FIG. 9 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 9, A represents a neural network, $x_t$ represents an input value, and $h_t$ represents an output value. Here, $h_t$ may refer to a state value representing the current state based on time, and $h_{t-1}$ may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

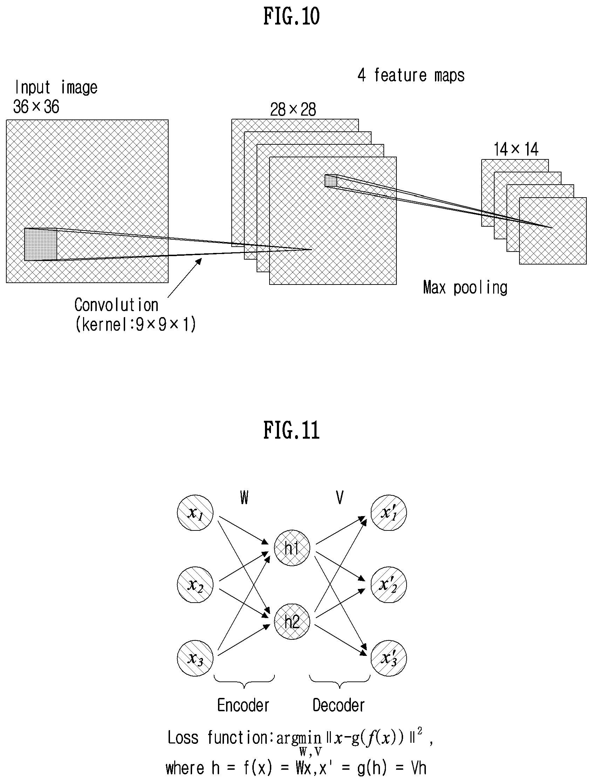

FIG. 10 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

FIG. 11 illustrates an auto encoder.

Auto encoder refers to a neural network that receives a feature vector x (x1, x2, x3, ...) as input and outputs the same or similar vector x' (x'1, x'2, x'3, ...)".

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 11 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

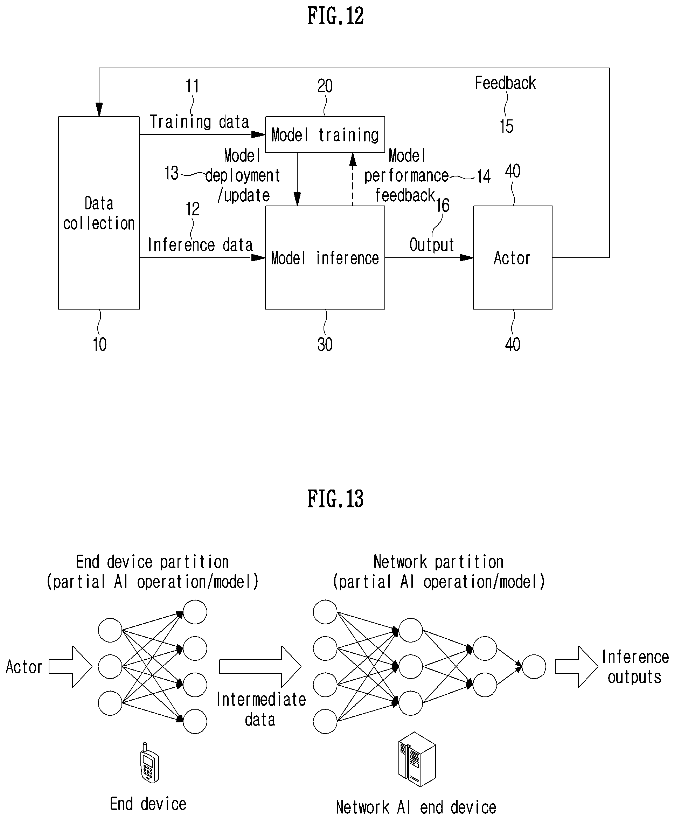

FIG. 12 illustrates a functional framework for an AI operation.

Referring to Figure 12, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 12 may be implemented in a RAN node (e.g., base station, TRP, base station central unit (CU), etc.), a network node, a network operator's operation administration maintenance (OAM), or a UE.

Alternatively, the function illustrated in FIG. 12 may be implemented through cooperation of two or more entities among a RAN, a network node, an OAM of network operator, or a UE. For example, one entity may perform some of the functions of FIG. 12 and other entities may perform the remaining functions. As such, as some of the functions illustrated in FIG. 12 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 12 may be performed through collaboration between two or more entities among a RAN, a network node, an OAM of a network operator, or a UE. This can be referred to as a split AI operation.

FIG. 13 is a diagram illustrating split AI inference.

FIG. 13 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

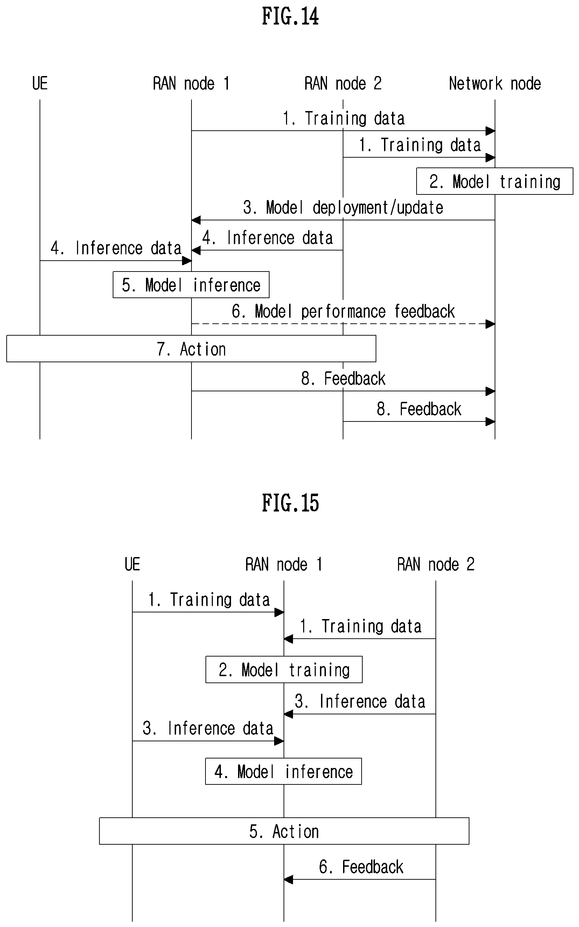

FIG. 14 illustrates an application of a functional framework in a wireless communication system.

FIG. 14 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 15 illustrates an application of a functional framework in a wireless communication system.

FIG. 15 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

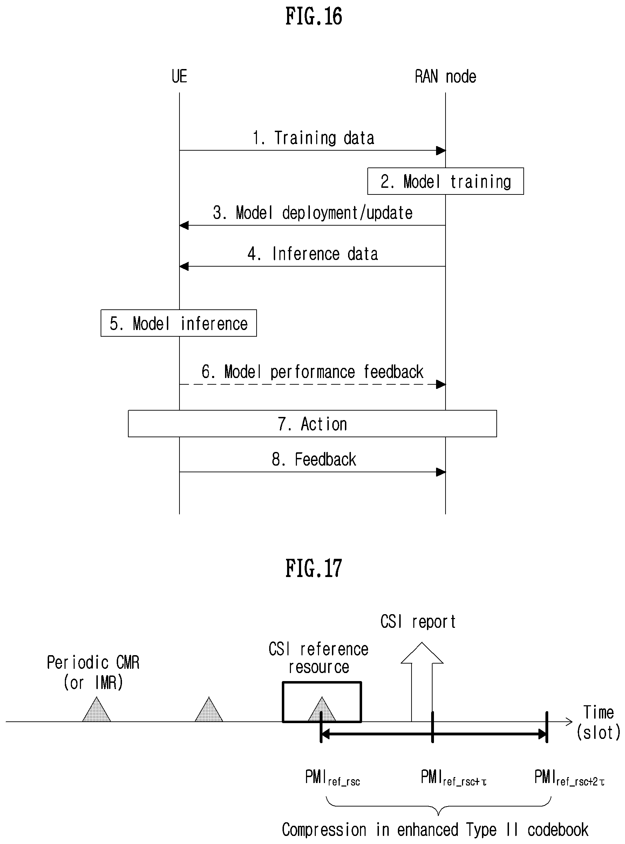

FIG. 16 illustrates an application of a functional framework in a wireless communication system.

FIG. 16 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

CSI(channel state information)-related Operation

In an NR (New Radio) system, a CSI-RS(channel state information-reference signal) is used for time and/or frequency tracking, CSI computation, L1(layer 1)-RSRP(reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

Parameters representing a usage of a CSI-RS (e.g., a 'repetition' parameter related to BM, a 'trs-Info' parameter related to tracking) may be configured per NZP CSI-RS resource set.

iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station.

When the quantity is configured as 'none', an aperiodic TRS is triggered or repetition is configured. In this case, only when repetition is configured as 'ON', a report of the terminal may be omitted.

1) CSI Measurement

An NR system supports more flexible and dynamic CSI measurement and reporting. Here, the CSI measurement may include a procedure of receiving a CSI-RS and acquiring CSI by computing a received CSI-RS.

As a time domain behavior of CSI measurement and reporting, aperiodic/semi-persistent/periodic CM (channel measurement) and IM (interference measurement) are supported. 4-port NZP CSI-RS RE pattern is used for CSI-IM configuration.

CSI-IM based IMR of NR has a design similar to CSI-IM of LTE and is configured independently from ZP CSI-RS resources for PDSCH rate matching. In addition, each port emulates an interference layer having (a desirable channel and) a precoded NZP CSI-RS in NZP CSI-RS-based IMR. As it is about intra-cell interference measurement for a multi-user case, MU interference is mainly targeted.

A base station transmits a precoded NZP CSI-RS to a terminal in each port of configured NZP CSI-RS based IMR.

A terminal assumes a channel/interference layer and measures interference for each port in a resource set.

When there is no PMI and RI feedback for a channel, a plurality of resources are configured in a set and a base station or a network indicates a subset of NZP CSI-RS resources through DCI for channel/interference measurement.

A resource setting and a resource setting configuration are described in more detail.

2) Resource Setting

Each CSI resource setting 'CSI-ResourceConfig' includes a configuration for a S≥1 CSI resource set (given by a higher layer parameter csi-RS-ResourceSetList). A CSI resource setting corresponds to CSI-RS- resourcesetlist. Here, S represents the number of configured CSI-RS resource sets. Here, a configuration for a S≥1 CSI resource set includes each CSI resource set including CSI-RS resources (configured with a NZP CSI-RS or CSI-IM) and a SS/PBCH block (SSB) resource used for L1-RSRP computation.

Each CSI resource setting is positioned at a DL BWP(bandwidth part) identified by a higher layer parameter bwp-id. In addition, all CSI resource settings linked to a CSI reporting setting have the same DL BWP.

A time domain behavior of a CSI-RS resource in a CSI resource setting included in a CSI-ResourceConfig IE may be indicated by a higher layer parameter resource Type and may be configured to be aperiodic, periodic or semi-persistent. For a periodic and semi-persistent CSI resource setting, the number (S) of configured CSI-RS resource sets is limited to '1'. For a periodic and semi-persistent CSI resource setting, configured periodicity and a slot offset are given by a numerology of an associated DL BWP as given by bwp-id.

When UE is configured with a plurality of CSI-ResourceConfigs including the same NZP CSI-RS resource ID, the same time domain behavior is configured for CSI-ResourceConfig.

When UE is configured with a plurality of CSI-ResourceConfigs including the same CSI-IM resource ID, the same time domain behavior is configured for CSI-ResourceConfig.

One or more CSI resource settings for channel measurement (CM) and interference measurement (IM) are configured through higher layer signaling as follows.

- CSI-IM resource for interference measurement
- NZP CSI-RS resource for interference measurement
- NZP CSI-RS resource for channel measurement

In other words, a CMR (channel measurement resource) may be a NZP CSI-RS for CSI acquisition and an IMR(Interference measurement resource) may be a NZP CSI-RS for CSI-IM and IM.

In this case, CSI-IM(or a ZP CSI-RS for IM) is mainly used for inter-cell interference measurement.

In addition, an NZP CSI-RS for IM is mainly used for intra-cell interference measurement from multi-users.

UE may assume that CSI-RS resource(s) for channel measurement and CSI-IM / NZP CSI-RS resource(s) for interference measurement configured for one CSI reporting are 'QCL-TypeD' per resource.

3) Resource Setting Configuration

As described, a resource setting may mean a resource set list.

For aperiodic CSI, each trigger state configured by using a higher layer parameter CSI-AperiodicTriggerState is associated with one or a plurality of CSI-ReportConfigs that each CSI-ReportConfig is linked to a periodic, semi-persistent or aperiodic resource setting.

One reporting setting may be connected to up to 3 resource settings.

- When one resource setting is configured, a resource setting (given by a higher layer parameter resourcesForChannelMeasurement) is about channel measurement for L1-RSRP computation.
- When two resource settings are configured, a first resource setting (given by a higher layer parameter resourcesForChannelMeasurement) is for channel measurement and a second resource setting (given by csi-IM-ResourcesForInterference or nzp-CSI-RS -ResourcesForInterference) is for interference measurement performed in CSI-IM or a NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement and a third resource setting (given by nzp-CSI-RS-ResourcesForInterference) is for NZP CSI-RS based interference measurement.

For semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.
- When two resource settings are configured, a first resource setting (given by resourcesForChannelMeasurement) is for channel measurement and a second resourece setting (given by a higher layer parameter csi-IM-ResourcesForInterference) is used for interference measurement performed in CSI-IM.

4) CSI Computation

When interference measurement is performed in CSI-IM, each CSI-RS resource for channel measurement is associated with a CSI-IM resource per resource in an order of CSI-RS resources and CSI-IM resources in a corresponding resource set. The number of CSI-RS resources for channel measurement is the same as the number of CSI-IM resources.
In addition, when interference measurement is performed in an NZP CSI-RS, UE does not expect to be configured with one or more NZP CSI-RS resources in an associated resource set in a resource setting for channel measurement.
A terminal configured with a higher layer parameter nzp-CSI-RS-ResourcesForInterference does not expect that 18 or more NZP CSI-RS ports will be configured in a NZP CSI-RS resource set.
For CSI measurement, a terminal assumes the followings.

- Each NZP CSI-RS port configured for interference measurement corresponds to an interference transmission layer.
- All interference transmission layers of an NZP CSI-RS port for interference measurement consider EPRE (energy per resource element) ratio.
- A different interference signal in RE(s) of an NZP CSI-RS resource for channel measurement, an NZP CSI-RS resource for interference measurement or a CSI-IM resource for interference measurement

5) CSI Report

For a CSI report, a time and frequency resource which may be used by UE are controlled by a base station.
CSI(channel state information) may include at least one of a channel quality indicator(CQI), a precoding matrix indicator(PMI), a CSI-RS resource indicator (CRI), a SS/PBCH block resource indicator (SSBRI), a layer indicator (LI), a rank indicator (RI) or L1-RSRP.
For CQI, PMI, CRI, SSBRI, LI, RI, L1-RSRP, a terminal is configured by a higher layer with N≥1 CSI-ReportConfig reporting setting, M≥1 CSI-ResourceConfig resource setting and a list of one or two trigger states (provided by aperiodicTriggerStateList and semiPersistentOnPUSCH-TriggerStateList). Each trigger state in the aperiodicTriggerStateList includes a associated CSI-ReportConfigs list which indicates a channel and optional resource set IDs for interference. In semiPersistentOnPUSCH-TriggerStateList, one associated CSI-ReportConfig is included in each trigger state.
In addition, a time domain behavior of CSI reporting supports periodic, semi-persistent, aperiodic.

i) Periodic CSI reporting is performed in a short PUCCH, a long PUCCH. Periodicity and a slot offset of periodic CSI reporting may be configured by RRC and refers to a CSI-ReportConfig IE.
ii) SP(semi-periodic) CSI reporting is performed in a short PUCCH, a long PUCCH, or a PUSCH.

For SP CSI in a short/long PUCCH, periodicity and a slot offset are configured by RRC and a CSI report is activated/deactivated by separate MAC CE / DCI.

For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used.

An initial CSI report timing follows a PUSCH time domain allocation value indicated by DCI and a subsequent CSI report timing follows a periodicity configured by RRC.

DCI format 0_1 may include a CSI request field and activate/deactivate a specific configured SP-CSI trigger state. SP CSI reporting has activation/deactivation equal or similar to a mechanism having data transmission in a SPS PUSCH.

iii) Aperiodic CSI reporting is performed in a PUSCH and is triggered by DCI. In this case, information related to trigger of aperiodic CSI reporting may be delivered/indicated/configured through MAC-CE.

For AP CSI having an AP CSI-RS, AP CSI-RS timing is configured by RRC and timing for AP CSI reporting is dynamically controlled by DCI.

In NR, a method of dividing and reporting CSI in a plurality of reporting instances applied to a PUCCH based CSI report in LTE (e.g., transmitted in an order of RI, WB PMI/CQI, SB PMI/CQI) is not applied. Instead, in NR, there is a limit that a specific CSI report is not configured in a short/long PUCCH and a CSI omission rule is defined. In addition, regarding AP CSI reporting timing, a PUSCH symbol/slot location is dynamically indicated by DCI. In addition, candidate slot offsets are configured by RRC. For CSI reporting, a slot offset(Y) is configured per reporting setting. For UL-SCH, a slot offset K2 is separately configured.

2 CSI latency classes (low latency class, high latency class) are defined with regard to CSI computation complexity. Low latency CSI is WB CSI which includes up to 4 ports Type-I codebooks or up to 4 ports non-PMI feedback CSI. High latency CSI refers to CSI other than low latency CSI. For a normal terminal, (Z, Z') is defined in a unit of OFDM symbols. Here, Z represents the minimum CSI processing time until a CSI report is performed after receiving aperiodic CSI triggering DCI. In addition, Z' refers to the minimum CSI processing time until a CSI report is performed after receiving a CSI-RS for a channel/interference.

Additionally, a terminal reports the number of CSI which may be calculated at the same time.

Method for transmitting and receiving CSI

According to the Rel-18 MIMO work item, the purpose of type II codebook enhancement is to help a base station to perform better link level adaptation to time varying channels due to high mobility of UEs.

Specifically, the enhanced type II codebook with time domain compression can provide a base station with precoding information for multiple time instances instead of a single time instance that is vulnerable to channel aging, so that the base station can track and predict the time-varying channel direction and ultimately schedule a better modulation and coding scheme (MCS) and precoder.

- Channel measurement for type II codebook enhancement:

Since type II codebook enhancement via time domain (TD) compression requires multi-channel measurements on the UE side, the existing UE must perform multi-channel measurements. According to the current specification, time domain channel/interference measurement restrictions can be enabled/disabled by the base station. When time domain channel/interference measurement restrictions are enabled (timeRestrictionForChannelMeasurements is set), the UE measures the latest CMR (channel measurement resource)/IMR (interference measurement resource) before the CSI reference resource, so a single measurement is used for channel estimation on the CSI reference resource. When time domain channel/interference measurement restrictions are disabled (timeRestrictionForChannelMeasurements is not set), the UE can measure multiple CMR/IMR instances before the CSI reference resource and it is up to the UE implementation how to estimate the channel in the CSI reference resource using these multiple measurements. With this unrestricted measurement setup, the UE can already compute CSI using multiple measurements. When codebook enhancements through TD compression are introduced in Rel-18, this unrestricted measurement setup is required to allow the UE to compute a PMI for multiple time instances.

Whether multi-channel measurements are possible depends on the periodicity of CMR/IMR as well as the time domain measurement limitation as described above. For aperiodic (AP) CMR/IMR, only a single measurement is possible because there is only one CMR/IMR instance without periodicity. On the other hand, periodic (P)/semi-persistent (SP) CMR/IMR can provide multiple opportunities for channel/interference measurements to the UE. However, since the minimum period of CSI-RS resources is 4 slots according to the current specification, it is necessary to consider whether sufficiently frequent measurement instances can be provided for high-speed UEs. If the CSI-RS resources are too sparse, the PMI accuracy may deteriorate due to poor TD compression, and if the CSI-RS resources are too dense, the CSI-RS overhead may increase.

- The multiple time instances represented by the enhanced type II codebook using TD compression are as follows:

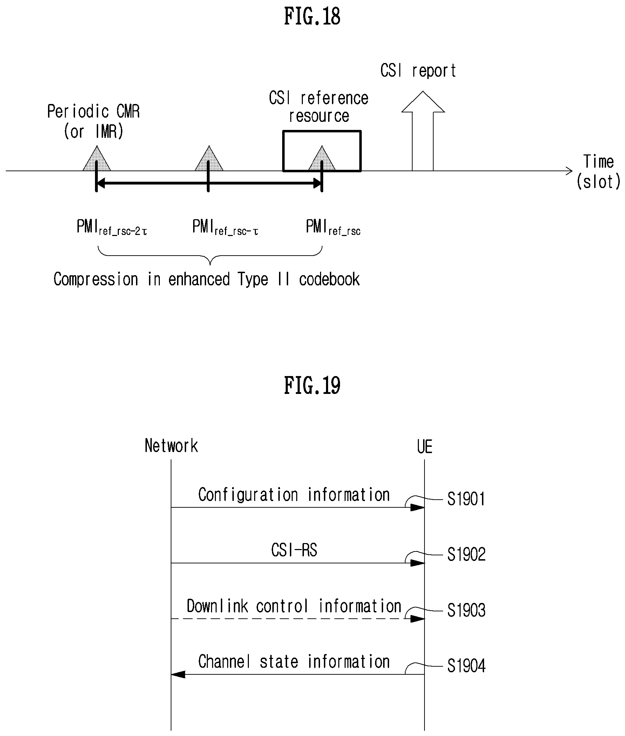

Similar to the legacy type II codebook using frequency domain (FD) compression that represents PMIs for multiple sub-bands, the new type II codebook using TD compression represents PMIs for multiple time instances, therefore the method for determining these multiple time instances should be discussed. The legacy CSI including PMI/RI/CQI represents a channel for a single time point, referred to as a CSI reference resource. However, the type II codebook applying TD compression should be able to provide PMIs not only in the CSI reference resource but also in other slots/symbols. Basically, these time instances can be defined as after (i.e., future) the CSI reference resource (in the case of FIG. 17) or before (i.e., past) the CSI reference resource (in the case of FIG. 18), which may have different impacts on the UE implementation.

A CSI reference resource may mean a frequency and time unit (i.e., resource) that a UE assumes is allocated/transmitted a PDSCH when calculating/deriving CSI, and may be defined as follows:

A CSI reference resource for a serving cell is defined as follows:

- In a frequency domain, a CSI reference resource is defined as a group of downlink physical resource blocks (PRBs) corresponding to a band in which the derived CSI is related. urce for CSI reporting in uplink slot n' is defined by a single

$$n - n_{CSI\_ref} - K_{offset} \cdot \frac{2^{\mu_{DL}}}{2^{\mu_{K_{offset}}}}$$

downlink slot . Here, $K_{offset}$ is a parameter configured by a higher layer as specified in section 4.2 of TS 38.213. And, $\mu_{Koffset}$ is a subcarrier spacing (SCS) configuration for $K_{offset}$ with a value of 0 for FR 1.

Here, $\left\lfloor 2^{\mu_{UL}} \right\rfloor$ $\left\lfloor \left( 2^{-offset,UL} \quad 2^{-offset,DL} \right) \right\rfloor$ , $\mu_{DL}$ and $\mu_{UL}$ are SCS configurations for DL and UL, respectively. $N_{slot, offset}^{CA}$ and $\mu_{offset}$ are determined by the ca-SlotOffset configured by the higher layer for cells transmitting uplink and downlink as defined in section 4.5 of TS 38.211.

Here, for periodic and semi-persistent CSI reporting, i) if a single CSI-RS/SSB resource is configured for channel measurement, $n_{CSI\_ref}$ is a minimum value greater than or equal to $4 \cdot 2^{\mu_{DL}}$ such that a CSI reference resource corresponds to a valid downlink slot, or ii) if multiple CSI-RS/SSB resources are configured for channel measurement, $n_{CSI\_ref}$ is a minimum value greater than or equal to $5 \cdot 2^{\mu_{DL}}$ such that a CSI reference resource corresponds to a valid downlink slot.

In addition, here, for aperiodic CSI reporting, if a UE is indicated by DCI to report CSI in the same slot as a CSI request, $n_{CSI-ref}$ is determined such that a CSI reference e same valid downlink slot as the CSI request. Otherwise, $n_{CSI\_ref}$

is a minimum value greater than or equal to $\left\lfloor Z' / N_{symb}^{slot} \right\rfloor$ such that slot n-$n_{CSI\_ref}$ corresponds to a valid downlink slot, where Z' corresponds to the delay requirement as defined in section 5.4 of TS 38.214.

FIG. 17 illustrates a PMI for multiple time instances not earlier than a CSI reference resource in a wireless communication system to which the present disclosure can be applied.

Referring to FIG. 17, a UE calculates the existing $PMI_{ref\_rsc}$ based on the DL channel of the CSI reference resource, which can be derived from the periodic CMR that is not later than the CSI reference resource. In addition, the UE calculates $PNH_{ref\_rsc+\tau}$ and $PNH_{ref\_rsc+2\tau}$ based on DL channels of the CSI reference resource+$\tau$ slot and the CSI reference resource+$2\tau$ slot, respectively, which are predicted from the periodic CMRs that are not later than the CSI reference resource. Finally, $PMI_{ref\_rsc}$, $PMI_{ref\_rsc+\tau}$, and $PMI_{ref\_rsc+2\tau}$ are compressed to reduce the PMI feedback overhead using an enhanced type II codebook with TD compression. Since this codebook includes future PMI that a UE is required to predict the DL channel after the CSI reference resource, it is robust to channel aging and the base station can use it for better link adaptation.

FIG. 18 illustrates a PMI for multiple time instances not later than a CSI reference resource in a wireless communication system to which the present disclosure can be applied.

Referring to FIG. 18, a UE calculates the legacy $PMI_{ref\_rsc}$ in the same manner as described in FIG. 17 above. However, unlike FIG. 17, the UE calculates $PMI_{ref\_rsc-\tau}$ and $_{PMI}ref\_rsc-2\tau$ based on DL channels in the CSI reference resource-$\tau$ slot and the CSI reference resource-$2\tau$ slot, which are periodic CMRs that are not later than the reference resource. FIG. 2 shows an example where the periodic CMRs are in the CSI reference resource, the CSI reference resource-$\tau$ slot, and the CSI reference resource-$2\tau$ slot. Finally, $PMI_{ref\_rsc}$, $PMI_{ref\_rsc-\tau}$, and $PMI_{ref\_rsc-2\tau}$ are compressed using an enhanced type II codebook with TD compression to reduce the PMI feedback overhead. Since this codebook includes the past PMI, a UE does not need to predict additional DL channels and is less complex than FIG. 17. However, there is a problem that $PMI_{ref\_rsc-\tau}$ and $PMI_{ref\_rsc-2\tau}$ are older than the existing $PMI_{ref\_rsc}$.

A time instance may mean a point in time (e.g., a slot) at which a PMI is calculated. In FIG. 17, the time instance represents a CSI reference resource (slot), a CSI reference resource+$\tau$ slot, and a CSI reference resource+$2\tau$ slot. In FIG. 18, the time instance represents a CSI reference resource (slot), a CSI reference resource-$\tau$ slot, and a CSI reference resource-$2\tau$ slot.

To determine the time instance of the channel expressed by the PMI as shown in FIG. 17 and FIG. 18, a base station may perform the following signaling to a UE. For example, it may be indicated as a parameter of RRC signaling for codebook configuration.

For example, first, it can be indicated/signaled how many time instances will be expressed as a PMI. In the examples of FIGS. 17 and 18, the number of time instances is exemplified as 3, but the present disclosure is not limited thereto. The number of time instances can be configured in various ways considering the temporal variability of the channel, and for this configuration, a UE can report its velocity information, Doppler information (Doppler shift/spread), etc. to a base station. Alternatively, a UE can report its preferred number of time instances from its velocity or Doppler information, etc. to a base station, and the base station can confirm or make a final selection (e.g., select a different number of time instances). For example, a UE can report candidate values for the number of time instances to a base station as a capability.

In addition, for example, an interval between time instances can be indicated/signaled, which indicates the $\tau$ value expressed in FIG. 17 and FIG. 18. The $\tau$ value can be configured in various ways considering the time variability of the channel, and for this configuration, a UE can report its velocity information, Doppler information (Doppler shift/spread), etc. to a base station. Alternatively, a UE can report its preferred $\tau$ value from its velocity or Doppler information, etc. to a base station, and the base station can confirm or make a final selection (e.g., determine a different $\tau$ value). For example, the $\tau$ value can be expressed in absolute time (e.g., ms, etc.), slot, OFDM symbol, etc. A UE can report candidate values for the $\tau$ value to a base station as a capability.

In addition, for example, it can be indicated/signaled which slot/symbol the time instances are located in. For example, a time instance offset can be signaled, and the time instance offset can be determined based on a CSI reference resource. In other words, it can be indicated/signaled which time instance a CSI reference resource corresponds to among the configured time instances. In FIG. 17, the CSI reference resource is configured to the first time instance among three time instances, and a base station can configure/indicate a time instance offset of the CSI reference resource to 0 to indicate this. Since the CSI reference resource is configured to the first time instance, the remaining time instances after the first time instance are configured after the CSI reference resource. In FIG. 18, the CSI reference resource is configured to the last (third) time instance among the three time instances, and a base station can configure/indicate a time instance offset of the CSI reference resource to 2 to indicate this. Since the CSI reference resource is configured to the third time instance, the remaining time instances before the third time instance are configured before the CSI reference resource. The time instance offset can be configured in various ways considering the temporal variation of the channel, and for this configuration, a UE can report its velocity information, Doppler information (Doppler shift/spread), etc. to a base station. Alternatively, a UE can report its preferred time instance offset from its velocity or Doppler information, etc. to a base station, and the base station can confirm or make a final selection (e.g., determine a different time instance offset value). In addition, depending on the UE implementation, UEs can be divided into a UE that can configure the time instance offset (i.e., CSI reference resource) only to the last time instance, as in FIG. 18, and a UE that can configure the time instance offset (i.e., CSI reference resource) to other time instances than the last time instance, as in FIG. 17, and a UE can report this to a base station as a capability. The former (in the case of FIG. 18) is simple to implement because a UE does not need to perform channel prediction, but the latter (in the case of FIG. 17) can be complex to implement because it needs to perform channel prediction. More specifically, in the latter case (in the case of FIG. 17), a UE can additionally report the minimum value of the configurable time instance offset or a candidate value of the configurable time instance offset to a base station. The smaller the minimum value, the more predictions need to be performed, therefore the UE implementation can be complex.

In the above proposal, a grid of time instances is configured by the number of time instances and an interval (i.e., the $\tau$ value), and a slot/symbol in which the grid of time instances is located can be determined by a time instance offset for a CSI reference resource.

In a similar but different way of expression, a grid of time instances can be determined by configuring a window of time instances to slots/symbols and configuring the number of time instances within the window. That is, time instances spaced equally apart as the number of time instances within the window can be configured. For example, if a window (which can be referred to as a CSI reporting window) is configured to 3 slots and the number of time instances is configured to 3, a grid of time instances is expressed as 3 consecutive slots. Here, if a time instance offset is 0, the final time instance is configured to the CSI reference resource slot, the CSI reference resource+1 slot, and the CSI reference resource+2 slot.

In the above example, time instances are configured to be equally spaced from each other. However, if the channel time variability changes over time and is predictable, such an evenly spaced distribution may be inefficient. For example, when N time instances are configured, if the channel time variability is severe in a front part of an entire time interval represented by a PMI and is small in a back part, arranging time instances densely in the front part and sparsely in the back part can increase the compression efficiency and accuracy for TD compression. For example, if a CSI reference resource is located in the first time instance, the second time instance can be located in the CSI reference resource+1 slot, the third time instance can be located in the CSI reference resource+2 slot, and the fourth time instance can be located in the CSI reference resource+5 slot. Therefore, an interval between time instances may not be equally spaced, and for this purpose, a UE can report a time instance location to a base station (together with the CSI). Alternatively, a base station can indicate/configure a time instance location to a UE. For example, it can be indicated in UL DCI that triggers AP CSI reporting.

Some parameters related to the proposed time instance configuration are fixed (with predefined values), and the remaining parameters can be configured by a base station or reported by a UE.

In the above proposal, a time instance offset is described based on a CSI reference resource, however this is an example and the present disclosure is not limited thereto. For example, a time instance offset may be configured based on a CSI reporting time (i.e., a time at which CSI is reported/transmitted) or the last time point of a CSI measurement window. Here, the CSI measurement window means a time interval in which a channel/interference can be measured for CSI calculation. For example, an offset (e.g., the number of slots) between the first time instances among time instances from a CSI reporting time or the last time point of a CSI measurement window may be configured as a time instance offset.

In the above proposal, the time instance offset can be configured to a negative value or a value greater than or equal to the number of time instances (or the number of time instances * the interval between time instances). For example, when the time instance offset is configured based on the CSI reference resource, if the time instance offset is negative, time instances can exist only in the future than the CSI reference resource. For example, when the number of time instances is 3, the interval between time instances is 1 slot, and the time instance offset configured based on the CSI reference resource is -1, the time instances can be configured to CSI reference resource+1 slot, CSI reference resource+2 slot, and CSI reference resource+3 slot.

On the other hand, if it is configured to a value greater than the number of time instances (or the number of time instances * the interval between time instances), time instances can exist only in the past before the CSI reference resource. For example, when the number of time instances is 3, the interval between time instances is 1 slot, and the time instance offset set based on the CSI reference resource is 4, the time instances can be configured to the CSI reference resource-3 slot, the CSI reference resource-2 slot, and the CSI reference resource-1 slot.

The range of values that can be configured to this time instance offset can be reported by a UE to a base station (as a capability), and in this case, the base station can indicate/configure the time instance offset value within this range.

When a base station indicates a UE with parameters/configuration values related to the proposed method, in the case of AP CSI reporting, it may be indicated together through an AP CSI reporting trigger field of the DCI. Alternatively, it may be indicated through the configuration information related to CSI reporting (e.g., CSI-ReportConfig IE) or in the configuration information related to a PMI codebook.

In addition, a UE may report (as a capability) the maximum value for the number of time instances and/or the time instance interval to a base station. Since the number of time instances and/or the time instance interval may increase as a UE requires more calculations for CSI calculation, the UE may report the maximum value to a base station, and the base station may configure the number of time instances and/or the time instance interval to the UE within a range that does not exceed the maximum value. Alternatively, a UE may report (as a capability) the combination of the number of time instances and the interval to a base station. For example, a UE may report to a base station the maximum interval slot when the number of time instances is N1, and the maximum interval slot when the number of time instances is N2. In other words, a UE may report to a base station the maximum time instance interval that can be supported by each of the number of time instances. Alternatively, a UE may report to a base station the maximum number of time instances that can be supported by each of the time instance intervals. As the number of time instances increases, the maximum interval supported by a UE may decrease, so this reporting method may be effective.

This reporting method may be applied even when a window of time instances is used instead of an interval of time instances, by replacing the interval of time instances with the window of time instances. That is, a UE may report to a base station the maximum window of time instances that can be supported for each number of time instances. Alternatively, a UE may report to a base station the maximum number of time instances that can be supported for each window of time instances.

The time instances for deriving CSI (or PMI) can be finally applied/determined through the combination/combination of the above proposals.

As described above, in order for a UE to predict and report a PMI for multiple time instances, the UE needs to measure the channel with a narrower time interval than the existing CMR (channel measurement resource)/IMR (interference measurement resource). To this end, two alternatives (alt) are being discussed in the standardization meeting on how to set up burst CSI-RS (or burst channel measurement (or burst CMR) or burst interference measurement (or burst IMR)) that can measure the same channel/interference with a narrow time interval.

In describing the present disclosure, for convenience of explanation, multiple time instances related to the above-described CSI report are referred to as a CSI reporting windows but the present disclosure is not limited thereto.

In addition, in the present disclosure, burst CSI-RS (or burst CSI-RS resource, CSI-RS burst, CSI-RS resource burst) may mean a set/group of CSI-RS resources used for measurement to report CSI for multiple time instances.

Alt 1: A method for configuring a single CSI-RS resource with a narrow time interval

Alt 2: A method for configuring K (K>1) CSI-RS resources with a narrow time interval, and for a UE to measure the same channel (or the same interference) through the K CSI-RS resources (i.e., the UE assumes that the ports (port i) of each CSI-RS resource constituting the K CSI-RS resources are the same ports and measures the channel/interference.)

Hereinafter, in the description of the present disclosure, for the convenience of explanation, the description is mainly based on Alt 2, but the present disclosure is not limited thereto, and the proposed method can also be applied to Alt 1.

The basic CSI report is set up in the following method.

M NZP CSI-RS resources are configured by the configuration information for the NZP CSI-RS resource set (e.g., NZP-CSI-RS-ResourceSet) in the configuration information for the NZP CSI-RS resource set list (e.g., nzp-CSI-RS-ResourceSetList)(can be more than 1 set only if it is AP CSI-RS) in the configuration information for the CSI resource (e.g., CSI-ResourceConfig) configured in the configuration information for CSI reporting (e.g., CSI-ReportConfig). Here, for Rel-17 MTRP CSI, M=M1+M2, the first M1 CSI-RS resources are configured to group 1, the remaining CSI-RS resources are configured to group 2, and one CSI-RS resource of group 1 and one CSI-RS resource of group 2 are connected to configure one pair, and up to 2 pairs can be configured in total.

In other words, a specific CSI report is configured with configuration information for CSI reporting (e.g., CSI-ReportConfig), and CMR (channel measurement resource) and IMR (interference measurement resource) are each configured with the configuration information for the CSI resource (e.g., CSI-ResourceConfig). The configuration information for the CSI resource (e.g., CSI-ResourceConfig) includes the configuration information for the NZP CSI-RS resource set list (e.g., nzp-CSI-RS-ResourceSetList), the configuration information for the NZP CSI-RS resource set list (e.g., nzp-CSI-RS-ResourceSetList) includes the configuration information for one or more NZP CSI-RS resource sets (e.g., NZP-CSI-RS-ResourceSet), and the configuration information for the NZP CSI-RS resource set (e.g., NZP-CSI-RS-ResourceSet) includes M NZP CSI-RS resources.

When the Alt 1 is supported, each CSI-RS resource has (or forms) a burst CSI-RS pattern that appears multiple times in a narrow time interval, and each CSI-RS resource can have (or form) a different burst CSI-RS pattern. For example, CSI-RS resource 1 can be configured with a burst CSI-RS pattern having 1 slot interval, and CSI-RS resource 2 can be configured with a burst CSI-RS pattern having 2 slot intervals. In this case, a UE can select a specific CSI-RS resource through a CSI-RS resource indicator (CRI).

On the other hand, if the above Alt 2 is supported, the NZP-CSI-RS-ResourceSet is composed of K (K is a natural number) CSI-RS resources, and multiple such CSI-RS resource sets can be configured by nzp-CSI-RS-ResourceSetList. Here, the value of K can be different for each CSI-RS resource set. That is, the CSI-RS resource set i can be configured with $K_i$ CSI-RS resources, and the CSI-RS resources constituting each CSI-RS resource set can be interpreted as one burst CSI-RS. In this case, a UE can select one (or multiple) NZP-CSI-RS-ResourceSet among the CSI-RS resource sets in the nzp-CSI-RS-ResourceSetList and report it through the CRI or a new CSI reporting quantity similar to the CRI. In other words, a UE can select one or more CSI-RS resource sets from among the CSI-RS resource sets and report them to a base station.

Alternatively, only one CSI-RS resource set may be configured, and multiple CSI-RS resource groups may be configured, each of which consists of $K_i$ CSI-RS resources for M CSI-RS resources configured within one CSI-RS resource set. That is, group i consists of $K_i$ CSI-RS resources, and the CSI-RS resources configuring each group may be interpreted as one burst CSIRS. In this case, a UE may select one (or multiple) of the CSI-RS resource groups through a CRI or a new CSI reporting quantity similar to a CRI, and report it to a base station. In other words, a UE may select one or more CSI-RS resource groups among the CSI-RS resource groups within the CSI-RS resource set and report it to a base station.

As described above, if Alt 1 or Alt 2 is supported, a UE can select one of several burst measurement patterns via a CRI (or a newly defined CSI reporting quantity to select one burst CSI-RS). For example, the following can be considered.

Example 1)

- Burst pattern 1 (i.e. CSIRS resource 1 or NZP-CSI-RS-ResourceSet 1 or CSI-RS resource group 1): CSI-RS is configured to 4 measurement occasions at 1 slot intervals.
- Burst pattern 2 (i.e. CSIRS resource 2 or NZP-CSI-RS-ResourceSet 2 or CSI-RS resource group 2): CSI-RS measurement occasions are set 8 times at 2 slot intervals.

In the Example 1, in burst pattern 1, CSI-RS resources are configured in each slot for 4 slots, whereas in burst pattern 2, CSI-RS resources are configured in 2 slot intervals for 16 slots. That is, pattern 2 enables channel/interference measurements with greater frequency for a longer period of time than pattern 1. Therefore, when pattern 2 is used, channel prediction for a further time point is more accurately possible. As a result, the CSI reporting window can be changed depending on which burst pattern a UE selects as a CRI (or reporting quantity for indicating the selected burst pattern). Here, the CSI reporting window can mean time instances of a channel expressed by a PMI/CQI, and can include an interval between time instances or the number of time instances.

For example, if burst pattern 1 is selected by a UE, the UE can generate/report a PMI by configuring the CSI reporting window to {the number of time instances = 2, time instance interval (duration) = 1 slot, time instance offset = 1 slot}. If burst pattern 2 is selected by a UE, the UE can generate/report a PMI by configuring the CSI reporting window to {the number of time instance = 4, time instance interval = 1 slot, time instance offset = 2 slot}. As a special case, when the number of time instances is 2 (i.e., for burst pattern 1), the PMI overhead reduction effect due to time domain (TD)/Doppler domain (DD) compression is not significant, therefore a PMI can be reported without TD/DD compression, and the PMI value related to spatial domain (SD)/frequency domain (FD)/TD/DD basis selection is reported only once and commonly applied to multiple time instances, and the coefficients applied to the linear combination between basis (i.e., W2) can be reported independently for each time instance.

The interval between time instances can be configured by a base station to the UE as one of codebook parameters in time units, or a UE can report it to a base station. For example, the interval between time instances can be configured to n slots or n symbols. And the number of time instances can be equal to the DD/TD basis vector length (=N4) selected to perform DD or TD compression.

Example 2)

- Burst pattern 1 (i.e., CSIRS resource 1 or NZP-CSI-RS-ResourceSet 1 or CSI-RS resource group 1): CSI-RS is configured to 4 measurement occasions at 1 slot intervals.
- Burst pattern 2 (i.e., CSIRS resource 2 or NZP-CSI-RS-ResourceSet 2 or CSI-RS resource group 2): Same as the existing CSI-RS configuration, however 1 measurement occasion is configured. That is, it is not actually a burst pattern.

In the Example 2, if burst pattern 2 is selected, a UE reports a PMI/CQI for a single time instance to a base station using the existing Rel-17 type II codebook. For example, if a UE performs CSI prediction using burst pattern 1 but determines that the prediction accuracy is low (e.g., if the accuracy falls below a threshold configured by a base station or determined in advance), the UE may select burst pattern 2 with a CRI (or a reporting quantity to indicate the selected burst pattern) to fall back to the existing operation of reporting existing CSI without prediction. Here, the CSI-RS of burst pattern 2 may be configured as a subset of the CSI-RS of burst pattern 1.

For example, burst pattern 2 may be configured with 1 CSI-RS resource (e.g., ID=0), and burst pattern 1 may be configured with 4 CSIRS resources (e.g., ID=0,1,2,3, respectively). In this case, if a UE performs channel measurement and calculates CSI through burst pattern 1, it is sufficient not to perform additional channel measurement or calculate additional CSI for burst pattern 2. Accordingly, a CSI processing unit (CPU) for burst pattern 2 may not be additionally (i.e., separately) allocated.

The above proposal assumes a case where multiple burst CSI-RS patterns for CMR/IMR are configured for one CSI report, and whether or not to configure the CSI reporting window or whether or not make a prediction is determined depending on which pattern a UE selects with a CRI (or a reporting quantity for indicating the selected burst pattern). In order to prevent the CSI reporting window configuration and whether or not to make a prediction from changing depending on a CRI (or a reporting quantity for indicating the selected burst pattern), a UE may not expect that a base station configures the number of measurement occasions, the time interval between occasions, or the measurement window differently for each burst CSI-RS, when a base station configures multiple burst CSI-RSs.

When a burst pattern selected by a CRI (or a reporting quantity for indicating the selected burst pattern) is changed, the Z value (i.e., the minimum time from the DCI trigger time to the CSI report time in aperiodic reporting, i.e., the minimum guaranteed time for CSI calculation) and Z' (the minimum time from the last symbol of CMR/IMR to the CSI report time in aperiodic reporting) values for the corresponding CSI report may change depending on a CRI (or a reporting quantity for indicating the selected burst pattern) value (i.e., depending on the selected burst pattern). For example, when burst pattern 2 is selected in Example 1 described above, since the measurement window is long, it may take more time to perform channel measurement and also may take more time to extrapolate the measurement to perform channel prediction, and therefore, the Z and Z' values may be set larger than those of burst pattern 1.

As described above, if the Z value and/or Z' value are changed according to a CRI (or a reporting quantity for indicating the selected burst pattern) value (i.e., according to the selected burst pattern), a problem occurs in that a base station cannot know the Z, Z' values before receiving a CSI report from a UE.

Therefore, to solve this problem, the maximum value among the Z values calculated based on each burst pattern can be determined as the final Z value for the corresponding CSI report.

In addition, the maximum value among the Z' values calculated based on each burst pattern can be determined as the final Z' value for the corresponding CSI report.

In addition, the maximum number of CPUs calculated based on each burst pattern can be determined as the final occupied (or used) CPU number for the corresponding CSI report.

Reporting CSI for multiple time instances can be performed by configuring one CMR configured for CSI calculation to burst continuously for a short time interval (e.g., every slot, or every symbol), configuring a codebook that uses TD/DD compression for PMI reporting, configuring one W1 and multiple W2s corresponding to different time instances for PMI reporting, or configuring multiple time instances/multiple CSI reference resources.

In addition, the operation of reporting CSI for multiple time instances according to the present disclosure can be finally applied through the combination/combination of the above proposals.

The above proposals were explained based on a burst pattern being configured for CMR for convenience of explanation, but a burst pattern can also be configured for IMR, and the proposed method can be applied in this case as well.

The above proposals were explained as an example of a codebook to which TD compression using a TD basis is applied for convenience of explanation, but the proposed method can be extended and applied to a codebook to which DD compression using a DD basis is applied.

The above proposal can also be applied when AI/ML UE predicts future CSI (e.g., CSI for a channel after the CSI reporting time) and reports it to a base station.

The parameters in the above proposal, whether to apply the proposal, etc. can be indicated by a base station to a UE (e.g., RRC signaling), reported by the UE to the base station, or configured to a fixed value.

FIG. 19 illustrates a signaling procedure between a network and a UE for a method for transmitting and receiving channel state information according to an embodiment of the present disclosure.

FIG. 19 illustrates signaling between a network (e.g., TRP 1, TRP 2) and a UE for the methods proposed in the present disclosure. Here, the UE/network are only examples and can be replaced with various devices. FIG. 19 is only for convenience of explanation and does not limit the scope of the present disclosure. In addition, some step(s) illustrated in FIG. 19 may be omitted depending on the situation and/or setting, etc.

The signaling scheme described in FIG. 19 can be extended and applied to signaling between multiple TRPs and multiple UEs. In the following description, a network may be one base station including multiple TRPs, and may be one cell including multiple TRPs. For example, an ideal/non-ideal backhaul may be established between TRP 1 and TRP 2 constituting the network. In addition, although the following description is based on multiple TRPs, it can be equally extended and applied to transmission through multiple panels. In addition, in the present disclosure, the operation of the UE receiving a signal from TRP1/TRP2 can also be interpreted/described as (or can be an operation of) the UE receiving a signal from the network (via/using TRP1/2), and the operation of the terminal transmitting a signal to TRP1/fRP2 can also be interpreted/described as (or can be an operation of) the UE transmitting a signal to the network (via/using TRP1/TRP2), and vice versa.

A base station may be a general term for an object that performs data transmission and reception with a UE. For example, the base station may be a concept including one or more TPs (Transmission Points), one or more TRPs (Transmission and Reception Points), etc. In addition, the TP and/or TRP may include a panel, a transmission and reception unit, etc. of the base station. In addition, "TRP" may be applied by replacing it with expressions such as panel, antenna array, cell (e.g., macro cell / small cell / pico cell, etc.), TP (transmission point), base station (gNB, etc.). As described above, a TRP may be distinguished according to information (e.g., index, ID) about a CORESET group (or CORESET pool). For example, if a UE is configured to transmit and receive with multiple TRPs (or cells), this may mean that multiple CORESET groups (or CORESET pools) are configured for the UE. The configuration of such CORESET groups (or CORESET pools) may be performed via higher layer signaling (e.g., RRC signaling, etc.).

A UE receives configuration information from a network (S1901).

The configuration information may include information related to the configuration of the network (e.g., TRP configuration) / information related to transmission and reception based on M-TRP (e.g., resource allocation, etc.). At this time, the configuration information may be transmitted through higher layer signaling (e.g., RRC signaling, MAC-CE, etc.).

The configuration information may include configuration information related to CSI described in the proposed methods described above.

The configuration information related to CSI may include at least one of CSI-IM (interference management) resource related information, CSI measurement configuration related information, CSI resource configuration related information, or CSI report configuration related information.

Here, the configuration information related to CSI may include configuration information related to CSI reporting (i.e., CSI report configuration) (e.g., RRC IE 'CSI-ReportConfig') (hereinafter, first configuration information) and configuration information related to CSI resources (i.e., CSI resource configuration) (e.g., RRC IE 'CSI-ResourceConfig') (hereinafter, second configuration information).

Here, multiple CSI-RS resources for CSI calculation/measurement may be configured for a UE by the configuration information related to CSI resources (i.e., CSI resource configuration). Additionally, one or more channel measurement resources (CMRs) (e.g., NZP CSI-RS) and/or one or more interference measurement resources (IMRs) (e.g., CSI-IM and/or NZP CSI-RS) may be configured by configuration information related to CSI resources (i.e., CSI resource settings). CMRs and IMRs may be collectively referred to as CSI resources (or CSI-RS resources).

In addition, configuration information related to CSI resources (or CSI-RS resource) (i.e., CSI resource setting) may be connected/associated with specific configuration information related to CSI reporting (i.e., CSI report setting), and according to a report quantity (reportQuantity) in the CSI report setting, CSI reports (e.g., CRI, PMI, RI, CQI, LI, etc.) for a plurality of CSI resources configured by the connected/associated CSI resource setting may be configured for a UE.

In addition, the configuration information related to CSI may include information on a plurality of CSI-RS burst patterns, and each of the plurality of CSI-RS burst patterns may include one or more CSI-RS resources.

Here, a CSI-RS burst pattern corresponds to one (periodic) CSI-RS resource, and the plurality of CSI-RS burst patterns may correspond to multiple CSI-RS resources having different patterns. In this case, a UE may report to a base station using a CRI indicating a specific CSI-RS resource to report the determined/selected (one or more) CSI-RS burst patterns to a base station.

In addition, a CSI-RS burst pattern corresponds to a CSI-RS resource set including M (M is a natural number) CSI-RS resources, and the plurality of CSI-RS burst patterns may correspond to a plurality of CSI-RS resource sets having different patterns. In this case, a UE may report to a base station using information/indicator for indicating a specific CSI-RS resource set in order to report the determined/selected (one or more) CSI-RS burst patterns to a base station.

In addition, a CSI-RS burst pattern corresponds to a CSI-RS resource group including K (K is a natural number) CSI-RS resources within a CSI-RS resource set, and the plurality of CSI-RS burst patterns may correspond to a plurality of CSI-RS resource groups having different patterns. In this case, a UE may report to the base station using information/indicator for indicating a specific CSI-RS resource group in order to report the determined/selected (one or more) CSI-RS burst patterns to a base station.

A UE receives a CSI-RS from multiple CSI resources configured by configuration information from a network (S1902).

Here, a UE can receive a CSI-RS in the plurality of CSI-RS burst patterns configured by the configuration information.

As described above, if one CSI-RS resource set corresponds to one CSI-RS burst pattern, a UE can assume that all M CSI-RS resources included in the CSI-RS resource set are the same antenna port. Similarly, if one CSI-RS resource group corresponds to one CSI-RS burst pattern, the UE can assume that all K CSI-RS resources included in the CSI-RS resource group are the same antenna port.

A UE can receive downlink control information (DCI) from a network (S1903).

Here, DCI may be DCI that triggers aperiodic CSI reporting to a UE, or may be aCI that activates semi-persistent CSI reporting.

In addition, DCI may be transmitted via a downlink control channel (e.g., PDCCH, etc.), and may schedule a downlink data channel (e.g., PDSCH)/uplink data channel (e.g., PUSCH) in addition to triggering/activating CSI reporting.

A UE transmits (reports) CSI to a network (S1904).

Here, the CSI may include at least one of a CQI, a PMI, an RI, a CRI, and an LI.

As described above, a UE can report CSI to a network based on the configuration information related to CSI reporting (and upon trigger/activation by DCI). For example, the configuration information related to CSI reporting can configure CSI reporting types such as periodic CSI reporting, semi-persistent CSI reporting, and aperiodic CSI reporting, and it can configure what information (e.g., CRI, CQI, PMI, RI, LI, etc.) should be reported in the CSI. In addition, in case of periodic CSI reporting, the periodicity and slot offset, etc. can also be configured.

According to the proposed methods described above, the CSI can be calculated/derived based on multiple time instances using channel and/or interference measurements for a CSI-RS burst pattern determined from among the plurality of CSI-RS burst patterns. In other words, a UE can perform channel and/or interference measurements based on CSI-RS resources in the determined CSI-RS burst pattern, and calculate or predict CSI based on each of multiple time instances using the channel and/or interference measurements. Here, for example, in case of a PMI, a value calculated/predicted in each time instance can be TD compressed and included in CSI. In addition, in case of a CQI, it can be included in CSI as one value (for example, a value calculated/predicted from a CSI reference resource) or two values for multiple time instances. In addition, in case of an RI, it can be included in CSI as one common value for multiple time instances.

In addition, the CSI may include information/indicator indicating the determined CSI-RS burst pattern. If the plurality of CSI-RS burst patterns correspond to a plurality of CSI-RS resources having different patterns, a UE may use a CRI indicating a specific CSI-RS resource to report the determined/selected (one or more) CSI-RS burst pattern to a base station. In addition, if the plurality of CSI-RS burst patterns correspond to a plurality of CSI-RS resource sets having different patterns or a plurality of CSI-RS resource groups having different patterns, a UE may use information/indicator to indicate a specific CSI-RS resource set or a specific CSI-RS resource group to report the determined/selected (one or more) CSI-RS burst pattern to a base station.

In addition, the multiple time instances (i.e., CSI reporting windows) used to calculate the CSI can be determined based on the determined CSI-RS burst pattern. Here, the multiple time instances can be configured with the number of time instances, an interval between time instances, and a time instance offset. In addition, the multiple time instances can be configured by the base station or selected by a UE for at least one of the number of time instances, the interval between time instances, and the time instance offset. Here, when configured by a base station, the multiple time instances can be reported to a base station as a capability of a UE for a preference value for at least one of the number of time instances, the interval between time instances, and the time instance offset. In addition, the time instance offset can be configured based on a CSI reference resource, the last time point of the determined CSI-RS burst pattern, or the reporting time point of the CSI.

In addition, the minimum CSI processing time (Z) from the reception of CSI triggering downlink control information (DCI) for reporting of the CSI to the reporting of the CSI may be determined as the maximum value among the Z values for each of the plurality of CSI-RS burst patterns.

Additionally, the minimum CSI processing time (Z') from the reception of CSI-RS for channel and/or interference measurement for reporting of the CSI to reporting of the CSI may be determined as the maximum value among the Z' values for each of the plurality of CSI-RS burst patterns.

Additionally, the number of CSI processing units (CPUs) occupied for reporting the CSI may be determined as the maximum value among the numbers of CPUs for each of the plurality of CSI-RS burst patterns.

In addition, a subset of one CSI-RS burst pattern among the plurality of CSI-RS burst patterns may correspond to another CSI-RS burst pattern. For example, if the plurality of CSI-RS burst patterns include a first CSI-RS burst pattern and a second CSI-RS burst pattern, and the first CSI-RS burst pattern includes the second CSI-RS burst pattern, a CPU may not be allocated for the second CSI-RS burst pattern.

Meanwhile, the operation of calculating the CSI described above (i.e., the operation of calculating the CSI by predicting the channel) (or the operation of calculating the channel prediction accuracy) can be performed by the UE (or an external device mounted on or connected to the UE), and at least one of the functions for the AI/ML operation of the FIG. 12 described above (in particular, model inference) to calculate the CSI (or channel prediction accuracy) can be performed by the UE (or an external device mounted on or connected to the UE). In addition, the UE (or an external device mounted on or connected to the UE) can determine multiple time instances (i.e., CSI reporting windows) (e.g., the number of time instances, the interval between time instances, and the time instance offset) expressed by the CSI in the determined CSI-RS burst patterns through the procedure of the FIG. 16 described above (in particular, 5. model inference).

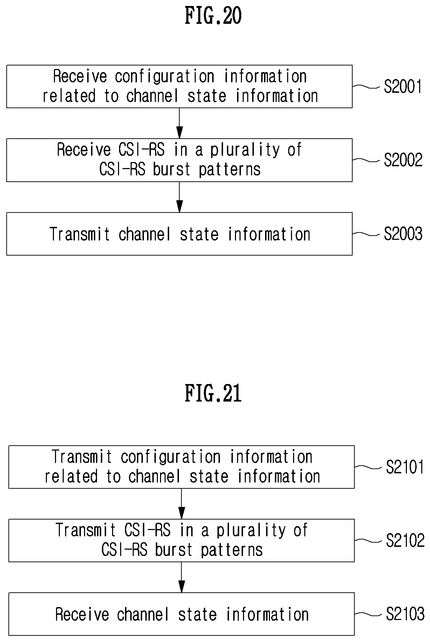

FIG. 20 is a diagram illustrating operations of a UE for a method for transmitting and receiving channel state information according to an embodiment of the present disclosure.

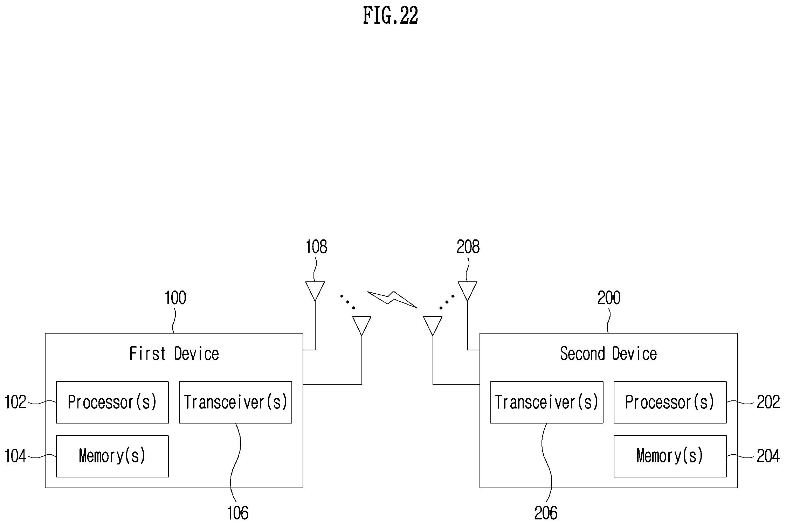

Referring to FIG. 20, FIG. 20 illustrates an operation of a UE based on the methods proposed in the present disclosure. The example of FIG. 20 is for convenience of explanation and does not limit the scope of the present disclosure. Some step(s) illustrated in FIG. 20 may be omitted depending on a situation and/or setting. In addition, the UE in FIG. 20 is only an example and may be implemented as a device illustrated in FIG. 22 below. For example, the processor (102/202) of FIG. 22 may control to transmit and receive channels/signals/data/information, etc. using a transceiver (106/206), and may also control to store transmitted or received channels/signals/data/information, etc. in a memory (104/204).

In addition, the operation of FIG. 20 may be processed by one or more processors (102, 202) of FIG. 22, and the operation of FIG. 20 may be stored in a memory (e.g., one or more memories (104, 204) of FIG. 22) in the form of a command/program (e.g., an instruction, an executable code) for driving at least one processor (e.g., 102, 202) of FIG. 22.

A UE receives configuration information related to channel state information (CSI) from a base station (S2001).

The configuration information related to the CSI may include the configuration information related to the CSI described in the above-described proposed methods.

The configuration information related to CSI may include at least one of CSI-IM (interference management) resource related information, CSI measurement configuration related information, CSI resource configuration related information, or CSI report configuration related information.

Here, the configuration information related to CSI may include configuration information related to CSI reporting (i.e., CSI report configuration) (e.g., RRC IE 'CSI-ReportConfig') (hereinafter, first configuration information) and configuration information related to CSI resources (i.e., CSI resource configuration) (e.g., RRC IE 'CSI-ResourceConfig') (hereinafter, second configuration information).

Here, multiple CSI-RS resources for CSI calculation/measurement may be configured for a UE by the configuration information related to CSI resources (i.e., CSI resource configuration). Additionally, one or more channel measurement resources (CMRs) (e.g., NZP CSI-RS) and/or one or more interference measurement resources (IMRs) (e.g., CSI-IM and/or NZP CSI-RS) may be configured by configuration information related to CSI resources (i.e., CSI resource settings). CMRs and IMRs may be collectively referred to as CSI resources (or CSI-RS resources).

In addition, configuration information related to CSI resources (or CSI-RS resource) (i.e., CSI resource setting) may be connected/associated with specific configuration information related to CSI reporting (i.e., CSI report setting), and according to a report quantity (reportQuantity) in the CSI report setting, CSI reports (e.g., CRI, PMI, RI, CQI, LI, etc.) for a plurality of CSI resources configured by the connected/associated CSI resource setting may be configured for a UE.

In addition, the configuration information related to CSI may include information on a plurality of CSI-RS burst patterns, and each of the plurality of CSI-RS burst patterns may include one or more CSI-RS resources.

Here, a CSI-RS burst pattern corresponds to one (periodic) CSI-RS resource, and the plurality of CSI-RS burst patterns may correspond to multiple CSI-RS resources having different patterns. In this case, a UE may report to a base station using a CRI indicating a specific CSI-RS resource to report the determined/selected (one or more) CSI-RS burst patterns to a base station.

In addition, a CSI-RS burst pattern corresponds to a CSI-RS resource set including M (M is a natural number) CSI-RS resources, and the plurality of CSI-RS burst patterns may correspond to a plurality of CSI-RS resource sets having different patterns. In this case, a UE may report to a base station using information/indicator for indicating a specific CSI-RS resource set in order to report the determined/selected (one or more) CSI-RS burst patterns to a base station.

In addition, a CSI-RS burst pattern corresponds to a CSI-RS resource group including K (K is a natural number) CSI-RS resources within a CSI-RS resource set, and the plurality of CSI-RS burst patterns may correspond to a plurality of CSI-RS resource groups having different patterns. In this case, a UE may report to the base station using information/indicator for indicating a specific CSI-RS resource group in order to report the determined/selected (one or more) CSI-RS burst patterns to a base station.

A UE receives a CSI-RS from multiple CSI resources configured by configuration information from a base station (S2002).

Here, a UE can receive a CSI-RS from a base station in the plurality of CSI-RS burst patterns configured by the configuration information.

As described above, if one CSI-RS resource set corresponds to one CSI-RS burst pattern, a UE can assume that all M CSI-RS resources included in the CSI-RS resource set are the same antenna port. Similarly, if one CSI-RS resource group corresponds to one CSI-RS burst pattern, the UE can assume that all K CSI-RS resources included in the CSI-RS resource group are the same antenna port.

Although not shown in FIG. 20, a UE may receive downlink control information (DCI) from a base station. Here, the DCI may be DCI that triggers aperiodic CSI reporting to a UE, or may be DCI that activates semi-persistent CSI reporting. In addition, the DCI may be transmitted over a downlink control channel (e.g., PDCCH, etc.), and may schedule a downlink data channel (e.g., PDSCH)/uplink data channel (e.g., PUSCH) in addition to triggering/activating CSI reporting.

A UE transmits (reports) CSI to a base station (S2003).

Here, the CSI may include at least one of a CQI, a PMI, an RI, a CRI, and an LI.

A UE can report CSI to a base station based on the configuration information related to CSI reporting (and upon trigger/activation by DCI). For example, the configuration information related to CSI reporting can configure CSI reporting types such as periodic CSI reporting, semi-persistent CSI reporting, and aperiodic CSI reporting, and it can configure what information (e.g., CRI, CQI, PMI, RI, LI, etc.) should be reported in the CSI. In addition, in case of periodic CSI reporting, the periodicity and slot offset, etc. can also be configured.

According to the proposed methods described above, the CSI can be calculated/derived based on multiple time instances using channel and/or interference measurements for a CSI-RS burst pattern determined from among the plurality of CSI-RS burst patterns. In other words, a UE can perform channel and/or interference measurements based on CSI-RS resources in the determined CSI-RS burst pattern, and calculate or predict CSI based on each of multiple time instances using the channel and/or interference measurements. Here, for example, in case of a PMI, a value calculated/predicted in each time instance can be TD compressed and included in CSI. In addition, in case of a CQI, it can be included in CSI as one value (for example, a value calculated/predicted from a CSI reference resource) or two values for multiple time instances. In addition, in case of an RI, it can be included in CSI as one common value for multiple time instances.

In addition, the CSI may include information/indicator indicating the determined CSI-RS burst pattern. If the plurality of CSI-RS burst patterns correspond to a plurality of CSI-RS resources having different patterns, a UE may use a CRI indicating a specific CSI-RS resource to report the determined/selected (one or more) CSI-RS burst pattern to a base station. In addition, if the plurality of CSI-RS burst patterns correspond to a plurality of CSI-RS resource sets having different patterns or a plurality of CSI-RS resource groups having different patterns, a UE may use information/indicator to indicate a specific CSI-RS resource set or a specific CSI-RS resource group to report the determined/selected (one or more) CSI-RS burst pattern to a base station.

In addition, the multiple time instances (i.e., CSI reporting windows) used to calculate the CSI can be determined based on the determined CSI-RS burst pattern. Here, the multiple time instances can be configured with the number of time instances, an interval between time instances, and a time instance offset. In addition, the multiple time instances can be configured by the base station or selected by a UE for at least one of the number of time instances, the interval between time instances, and the time instance offset. Here, when configured by a base station, the multiple time instances can be reported to a base station as a capability of a UE for a preference value for at least one of the number of time instances, the interval between time instances, and the time instance offset. In addition, the time instance offset can be configured based on a CSI reference resource, the last time point of the determined CSI-RS burst pattern, or the reporting time point of the CSI.

In addition, the minimum CSI processing time (Z) from the reception of CSI triggering downlink control information (DCI) for reporting of the CSI to the reporting of the CSI may be determined as the maximum value among the Z values for each of the plurality of CSI-RS burst patterns.

Additionally, the minimum CSI processing time (Z') from the reception of CSI-RS for channel and/or interference measurement for reporting of the CSI to reporting of the CSI may be determined as the maximum value among the Z' values for each of the plurality of CSI-RS burst patterns.

Additionally, the number of CSI processing units (CPUs) occupied for reporting the CSI may be determined as the maximum value among the numbers of CPUs for each of the plurality of CSI-RS burst patterns.

In addition, a subset of one CSI-RS burst pattern among the plurality of CSI-RS burst patterns may correspond to another CSI-RS burst pattern. For example, if the plurality of CSI-RS burst patterns include a first CSI-RS burst pattern and a second CSI-RS burst pattern, and the first CSI-RS burst pattern includes the second CSI-RS burst pattern, a CPU may not be allocated for the second CSI-RS burst pattern.

Meanwhile, the operation of calculating the CSI described above (i.e., the operation of calculating the CSI by predicting the channel) (or the operation of calculating the channel prediction accuracy) can be performed by the UE (or an external device mounted on or connected to the UE), and at least one of the functions for the AI/ML operation of the FIG. 12 described above (in particular, model inference) to calculate the CSI (or channel prediction accuracy) can be performed by the UE (or an external device mounted on or connected to the UE). In addition, the UE (or an external device mounted on or connected to the UE) can determine multiple time instances (i.e., CSI reporting windows) (e.g., the number of time instances, the interval between time instances, and the time instance offset) expressed by the CSI in the determined CSI-RS burst patterns through the procedure of the FIG. 16 described above (in particular, 5. model inference).

FIG. 21 is a diagram illustrating operations of a base station for a method for transmitting and receiving channel state information according to an embodiment of the present disclosure.

Referring to FIG. 21, FIG. 21 illustrates an operation of a base station based on the methods proposed in the present disclosure. The example of FIG. 21 is for convenience of explanation and does not limit the scope of the present disclosure. Some step(s) illustrated in FIG. 21 may be omitted depending on a situation and/or setting. In addition, the base station in FIG. 21 is only an example and may be implemented as a device illustrated in FIG. 22 below. For example, the processor (102/202) of FIG. 22 may control to transmit and receive channels/signals/data/information, etc. using a transceiver (106/206), and may also control to store transmitted or received channels/signals/data/information, etc. in a memory (104/204).

In addition, the operation of FIG. 21 may be processed by one or more processors (102, 202) of FIG. 22, and the operation of FIG. 21 may be stored in a memory (e.g., one or more memories (104, 204) of FIG. 22) in the form of a command/program (e.g., an instruction, an executable code) for driving at least one processor (e.g., 102, 202) of FIG. 22.

A base station transmits configuration information related to channel state information (CSI) to a UE (S2101).

The configuration information related to the CSI may include the configuration information related to the CSI described in the above-described proposed methods.

The configuration information related to CSI may include at least one of CSI-IM (interference management) resource related information, CSI measurement configuration related information, CSI resource configuration related information, or CSI report configuration related information.

Here, the configuration information related to CSI may include configuration information related to CSI reporting (i.e., CSI report configuration) (e.g., RRC IE 'CSI-ReportConfig') (hereinafter, first configuration information) and configuration information related to CSI resources (i.e., CSI resource configuration) (e.g., RRC IE 'CSI-ResourceConfig') (hereinafter, second configuration information).

Here, multiple CSI-RS resources for CSI calculation/measurement may be configured for a UE by the configuration information related to CSI resources (i.e., CSI resource configuration). Additionally, one or more channel measurement resources (CMRs) (e.g., NZP CSI-RS) and/or one or more interference measurement resources (IMRs) (e.g., CSI-IM and/or NZP CSI-RS) may be configured by configuration information related to CSI resources (i.e., CSI resource settings). CMRs and IMRs may be collectively referred to as CSI resources (or CSI-RS resources).

In addition, configuration information related to CSI resources (or CSI-RS resource) (i.e., CSI resource setting) may be connected/associated with specific configuration information related to CSI reporting (i.e., CSI report setting), and according to a report quantity (reportQuantity) in the CSI report setting, CSI reports (e.g., CRI, PMI, RI, CQI, LI, etc.) for a plurality of CSI resources configured by the connected/associated CSI resource setting may be configured for a UE.

In addition, the configuration information related to CSI may include information on a plurality of CSI-RS burst patterns, and each of the plurality of CSI-RS burst patterns may include one or more CSI-RS resources.

Here, a CSI-RS burst pattern corresponds to one (periodic) CSI-RS resource, and the plurality of CSI-RS burst patterns may correspond to multiple CSI-RS resources having different patterns. In this case, a base station may receive, from a UE, a CRI indicating a specific CSI-RS resource to report the determined/selected (one or more) CSI-RS burst patterns to a base station.

In addition, a CSI-RS burst pattern corresponds to a CSI-RS resource set including M (M is a natural number) CSI-RS resources, and the plurality of CSI-RS burst patterns may correspond to a plurality of CSI-RS resource sets having different patterns. In this case, with respect to reporting of the determined/selected (one or more) CSI-RS burst patterns, a base station may receive information/indicator from a UE to indicate a specific CSI-RS resource set.

In addition, a CSI-RS burst pattern corresponds to a CSI-RS resource group including K (K is a natural number) CSI-RS resources within a CSI-RS resource set, and the plurality of CSI-RS burst patterns may correspond to a plurality of CSI-RS resource groups having different patterns. In this case, with respect to the determined/selected (one or more) CSI-RS burst pattern reporting, a base station may receive information/indicator from a UE to indicate a specific CSI-RS resource group.

A base station transmits a CSI-RS to a UE from multiple CSI resources configured by the configuration information (S2102).

Here, a base station can transmit a CSI-RS a the UE from multiple CSI-RS burst patterns configured by the configuration information.

As described above, if one CSI-RS resource set corresponds to one CSI-RS burst pattern, a UE can assume that all M CSI-RS resources included in the CSI-RS resource set are the same antenna port. Similarly, if one CSI-RS resource group corresponds to one CSI-RS burst pattern, the UE can assume that all K CSI-RS resources included in the CSI-RS resource group are the same antenna port.

Although not shown in FIG. 21, a base station may transmit downlink control information (DCI) to a UE. Here, the DCI may be DCI that triggers aperiodic CSI reporting to a UE, or may be DCI that activates semi-persistent CSI reporting. In addition, the DCI may be transmitted over a downlink control channel (e.g., PDCCH, etc.), and may schedule a downlink data channel (e.g., PDSCH)/uplink data channel (e.g., PUSCH) in addition to triggering/activating CSI reporting.

A base station receives CSI from a UE (S2103).

Here, the CSI may include at least one of a CQI, a PMI, an RI, a CRI, and an LI.

A UE can report CSI to a base station based on the configuration information related to CSI reporting (and upon trigger/activation by DCI). For example, the configuration information related to CSI reporting can configure CSI reporting types such as periodic CSI reporting, semi-persistent CSI reporting, and aperiodic CSI reporting, and it can configure what information (e.g., CRI, CQI, PMI, RI, LI, etc.) should be reported in the CSI. In addition, in case of periodic CSI reporting, the periodicity and slot offset, etc. can also be configured.

According to the proposed methods described above, the CSI can be calculated/derived based on multiple time instances using channel and/or interference measurements for a CSI-RS burst pattern determined from among the plurality of CSI-RS burst patterns. In other words, a UE can perform channel and/or interference measurements based on CSI-RS resources in the determined CSI-RS burst pattern, and calculate or predict CSI based on each of multiple time instances using the channel and/or interference measurements. Here, for example, in case of a PMI, a value calculated/predicted in each time instance can be TD compressed and included in CSI. In addition, in case of a CQI, it can be included in CSI as one value (for example, a value calculated/predicted from a CSI reference resource) or two values for multiple time instances. In addition, in case of an RI, it can be included in CSI as one common value for multiple time instances.

In addition, the CSI may include information/indicator indicating the determined CSI-RS burst pattern. If the plurality of CSI-RS burst patterns correspond to a plurality of CSI-RS resources having different patterns, a UE may use a CRI indicating a specific CSI-RS resource to report the determined/selected (one or more) CSI-RS burst pattern to a base station. In addition, when the plurality of CSI-RS burst patterns correspond to a plurality of CSI-RS resource sets having different patterns or a plurality of CSI-RS resource groups having different patterns, in relation to reporting of the determined/selected (one or more) CSI-RS burst patterns, a base station may receive information/indicator from a UE to indicate a specific CSI-RS resource set or a specific CSI-RS resource group.

In addition, the multiple time instances (i.e., CSI reporting windows) used to calculate the CSI can be determined based on the determined CSI-RS burst pattern. Here, the multiple time instances can be configured with the number of time instances, an interval between time instances, and a time instance offset. In addition, the multiple time instances can be configured by the base station or selected by a UE for at least one of the number of time instances, the interval between time instances, and the time instance offset. Here, when configured by a base station, the base station can receive from a UE, as a capability of the UE, a preference value for at least one of the number of time instances, an interval between time instances, and a time instance offset. In addition, the time instance offset can be configured based on a CSI reference resource, a last time point of the determined CSI-RS burst pattern, or a reporting time point of the CSI.

In addition, the minimum CSI processing time (Z) from the reception of CSI triggering downlink control information (DCI) for reporting of the CSI to the reporting of the CSI may be determined as the maximum value among the Z values for each of the plurality of CSI-RS burst patterns.

Additionally, the minimum CSI processing time (Z') from the reception of CSI-RS for channel and/or interference measurement for reporting of the CSI to reporting of the CSI may be determined as the maximum value among the Z' values for each of the plurality of CSI-RS burst patterns.

Additionally, the number of CSI processing units (CPUs) occupied for reporting the CSI may be determined as the maximum value among the numbers of CPUs for each of the plurality of CSI-RS burst patterns.

In addition, a subset of one CSI-RS burst pattern among the plurality of CSI-RS burst patterns may correspond to another CSI-RS burst pattern. For example, if the plurality of CSI-RS burst patterns include a first CSI-RS burst pattern and a second CSI-RS burst pattern, and the first CSI-RS burst pattern includes the second CSI-RS burst pattern, a CPU may not be allocated for the second CSI-RS burst pattern.

Meanwhile, the operation of calculating the CSI described above (i.e., the operation of calculating the CSI by predicting the channel) (or the operation of calculating the channel prediction accuracy) can be performed by the UE (or an external device mounted on or connected to the UE), and at least one of the functions for the AI/ML operation of the FIG. 12 described above (in particular, model inference) to calculate the CSI (or channel prediction accuracy) can be performed by the UE (or an external device mounted on or connected to the UE). In addition, the UE (or an external device mounted on or connected to the UE) can determine multiple time instances (i.e., CSI reporting windows) (e.g., the number of time instances, the interval between time instances, and the time instance offset) expressed by the CSI in the determined CSI-RS burst patterns through the procedure of the FIG. 16 described above (in particular, 5. model inference).

General Device to which the Present Disclosure may be applied

FIG. 22 is a diagram which illustrates a block diagram of a wireless communication device according to an embodiment of the present disclosure.

In reference to FIG. 22, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving, from a base station, configuration information related to channel state information (CSI), wherein the configuration information includes information on a plurality of CSI-RS (CSI-reference signal) burst patterns, and each of the plurality of CSI-RS burst patterns includes one or more CSI-RS resources;
   receiving, from the base station, a CSI-RS from the plurality of CSI-RS burst patterns; and
   transmitting CSI to the base station,
   wherein the CSI is calculated based on multiple time instances using channel and/or interference measurement for a CSI-RS burst pattern determined among the plurality of CSI-RS burst patterns,
   wherein the CSI includes an indicator indicating the determined CSI-RS burst pattern, and
   wherein the multiple time instances for calculating the CSI are determined based on the determined CSI-RS burst pattern.

2. The method of claim 1, wherein the multiple time instances are configured with a number of time instances, an interval between time instances, and a time instance offset.

3. The method of claim 2, wherein at least one of the number of time instances, the interval between time instances, and the time instance offset is configured by the base station or selected by the UE.

4. The method of claim 2, wherein at least one of the number of time instances, the interval between time instances, and the time instance offset is reported to the base station as a capability of the UE.

5. The method of claim 2, wherein the time instance offset is configured based on a CSI reference resource, a last time point of the determined CSI-RS burst pattern, or a reporting time point of the CSI.

6. The method of claim 1, wherein a minimum CSI processing time (Z) from reception of CSI triggering downlink control information (DCI) for reporting of the CSI to reporting of the CSI is determined as a maximum value among Z values for each of the plurality of CSI-RS burst patterns.

7. The method of claim 1, wherein a minimum CSI processing time (Z') from reception of a CSI-RS for channel and/or interference measurement for reporting of the CSI to reporting of the CSI is determined as a maximum value among Z' values for each of the plurality of CSI-RS burst patterns.

8. The method of claim 1, wherein a number of CSI processing units (CPUs) occupied for reporting of the CSI is determined as a maximum value among numbers of CPUs for each of the plurality of CSI-RS burst patterns.

9. The method of claim 1, wherein the plurality of CSI-RS burst patterns include a first CSI-RS burst pattern and a second CSI-RS burst pattern, and
wherein a CSI processing unit (CPU) is not allocated to the second CSI-RS burst pattern based on the first CSI-RS burst pattern including the second CSI-RS burst pattern.

10. The method of claim 1, wherein the plurality of CSI-RS burst patterns correspond to a plurality of CSI-RS resources having different patterns, correspond to a plurality of CSI-RS resource sets having different patterns, or correspond to a plurality of CSI-RS resource groups having different patterns within one CSI-RS resource set.

11. A user equipment (UE) operating in a wireless communication system, the UE comprising:

at least one transceiver for transmitting and receiving a wireless signal; and
at least one processor for controlling the at least one transceiver,
wherein the at least one processor configured to:

receive, from a base station, configuration information related to channel state information (CSI), wherein the configuration information includes information on a plurality of CSI-RS (CSI-reference signal) burst patterns, and each of the plurality of CSI-RS burst patterns includes one or more CSI-RS resources;
receive, from the base station, a CSI-RS from the plurality of CSI-RS burst patterns; and
transmit CSI to the base station,
wherein the CSI is calculated based on multiple time instances using channel and/or interference measurement for a CSI-RS burst pattern determined among the plurality of CSI-RS burst patterns,
wherein the CSI includes an indicator indicating the determined CSI-RS burst pattern, and
wherein the multiple time instances for calculating the CSI are determined based on the determined CSI-RS burst pattern.

12. At least one non-transitory computer-readable medium storing at least one instruction, wherein the at least one instruction executable by at least one processor controls a user equipment (UE) to:

receive, from a base station, configuration information related to channel state information (CSI), wherein the configuration information includes information on a plurality of CSI-RS (CSI-reference signal) burst patterns, and each of the plurality of CSI-RS burst patterns includes one or more CSI-RS resources;
receive, from the base station, a CSI-RS from the plurality of CSI-RS burst patterns; and
transmit CSI to the base station,
wherein the CSI is calculated based on multiple time instances using channel and/or interference measurement for a CSI-RS burst pattern determined among the plurality of CSI-RS burst patterns,

wherein the CSI includes an indicator indicating the determined CSI-RS burst pattern, and

wherein the multiple time instances for calculating the CSI are determined based on the determined CSI-RS burst pattern.

13. A processing apparatus configured to control a user equipment (UE) in a wireless communication system, the processing apparatus comprising:

at least one processor; and

at least one computer memory operably connected to the at least one processor and storing instructions that, based on being executed by the at least one processor, perform operations comprising:

receiving, from a base station, configuration information related to channel state information (CSI), wherein the configuration information includes information on a plurality of CSI-RS (CSI-reference signal) burst patterns, and each of the plurality of CSI-RS burst patterns includes one or more CSI-RS resources;

receiving, from the base station, a CSI-RS from the plurality of CSI-RS burst patterns; and

transmitting CSI to the base station,

wherein the CSI is calculated based on multiple time instances using channel and/or interference measurement for a CSI-RS burst pattern determined among the plurality of CSI-RS burst patterns,

wherein the CSI includes an indicator indicating the determined CSI-RS burst pattern, and

wherein the multiple time instances for calculating the CSI are determined based on the determined CSI-RS burst pattern.

14. A method method performed by a base station in a wireless communication system, the method comprising:

transmitting, to a user equipment (UE), configuration information related to channel state information (CSI), wherein the configuration information includes information on a plurality of CSI-RS (CSI-reference signal) burst patterns, and each of the plurality of CSI-RS burst patterns includes one or more CSI-RS resources;

transmitting, to the UE, a CSI-RS from the plurality of CSI-RS burst patterns; and

receiving CSI from the UE,

wherein the CSI is calculated based on multiple time instances using channel and/or interference measurement for a CSI-RS burst pattern determined among the plurality of CSI-RS burst patterns,

wherein the CSI includes an indicator indicating the determined CSI-RS burst pattern, and

wherein the multiple time instances for calculating the CSI are determined based on the determined CSI-RS burst pattern.

15. A base station operating in a wireless communication system, the base station comprising:

at least one transceiver for transmitting and receiving a wireless signal; and

at least one processor for controlling the at least one transceiver,

wherein the at least one processor configured to:

transmit, to a user equipment (UE), configuration information related to channel state information (CSI), wherein the configuration information includes information on a plurality of CSI-RS (CSI-reference signal) burst patterns, and each of the plurality of CSI-RS burst patterns includes one or more CSI-RS resources;

transmit, to the UE, a CSI-RS from the plurality of CSI-RS burst patterns; and

receive CSI from the UE,

wherein the CSI is calculated based on multiple time instances using channel and/or interference measurement for a CSI-RS burst pattern determined among the plurality of CSI-RS burst patterns,

wherein the CSI includes an indicator indicating the determined CSI-RS burst pattern, and

wherein the multiple time instances for calculating the CSI are determined based on the determined CSI-RS burst pattern.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends
on subcarrier
spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
− In a resource grid, $(k, \bar{l})$
− In a resource block, $(k, l)$

$k = 0$

$l = 0$

$l = 14 \cdot 2^{\mu} - 1$

# FIG.4

# FIG.5

# FIG.6

INITIAL CELL SEARCH — PSS/SSS& [DLRS]& PBCH — S601

SYSTEM INFORMATION RECEPTION — PDCCH/ PDSCH (BCCH) — S602

RANDOM ACCESS PROCEDURE — PRACH — S603 — PDCCH/ PDSCH — S604 — PUSCH — S605 — PDCCH/ PDSCH — S606

GENERAL DL/UL Tx/Rx — PDCCH/ PDSCH — S607 — PUSCH/ PUCCH — S608

· DL/UL ACK/NACK
· UE CQI/PMI RI REPORT
  USING PUSCH AND PUCCH

## FIG.7

Artificial Intelligence

Machine learning

Deep Learning

## FIG.8

Input layer   Hidden layer   Output layer

## FIG.9

# FIG.10

Input image
36 × 36

4 feature maps

28 × 28

14 × 14

Convolution
(kernel:9 × 9 × 1)

Max pooling

# FIG.11

W                V

$x_1$

$h1$

$x'_1$

$x_2$

$x'_2$

$h2$

$x_3$

$x'_3$

Encoder        Decoder

Loss function: $\underset{W,V}{\operatorname{argmin}} \| x - g(f(x)) \|^2$,
where $h = f(x) = Wx, x' = g(h) = Vh$

## FIG.12

## FIG.13

End device partition
(partial AI operation/model)

Network partition
(partial AI operation/model)

Actor

Intermediate
data

Inference
outputs

End device

Network AI end device

# FIG.14

| UE | RAN node 1 | RAN node 2 | Network node |
|---|---|---|---|

1. Training data

1. Training data

2. Model training

3. Model deployment/update

4. Inference data

4. Inference data

4. Inference data

5. Model inference

6. Model performance feedback

7. Action

8. Feedback

8. Feedback

# FIG.15

| UE | RAN node 1 | RAN node 2 |
|---|---|---|

1. Training data

1. Training data

2. Model training

3. Inference data

3. Inference data

4. Model inference

5. Action

6. Feedback

## FIG.16

UE          RAN node

1. Training data

2. Model training

3. Model deployment/update

4. Inference data

5. Model inference

6. Model performance feedback

7. Action

8. Feedback

## FIG.17

CSI report

Periodic CMR
(or IMR)

CSI reference
resource

Time
(slot)

$PMI_{ref\_rsc}$   $PMI_{ref\_rsc+\tau}$   $PMI_{ref\_rsc+2\tau}$

Compression in enhanced Type II codebook

FIG.18

CSI report

Periodic CMR
(or IMR)

CSI reference
resource

Time
(slot)

$PMI_{ref\_rsc-2\tau}$        $PMI_{ref\_rsc-\tau}$        $PMI_{ref\_rsc}$

Compression in enhanced Type II codebook

FIG.19

Network                                        UE

Configuration information          S1901

CSI-RS          S1902

Downlink control information          S1903

Channel state information          S1904

FIG.20

Receive configuration information
related to channel state information — S2001

Receive CSI-RS in a plurality of
CSI-RS burst patterns — S2002

Transmit channel state information — S2003

FIG.21

Transmit configuration information
related to channel state information — S2101

Transmit CSI-RS in a plurality of
CSI-RS burst patterns — S2102

Receive channel state information — S2103

EP 4 597 867 A1

FIG.22

## INTERNATIONAL SEARCH REPORT

| | International application No. |
|---|---|
| | **PCT/KR2023/014315** |

| | | |
|---|---|---|
| **A.** | **CLASSIFICATION OF SUBJECT MATTER** | |

**H04B 7/06**(2006.01)i; **H04B 17/373**(2015.01)i; **H04W 72/23**(2023.01)i; **H04W 72/04**(2009.01)i; **H04W 24/08**(2009.01)i; **H04L 5/00**(2006.01)i

According to International Patent Classification (IPC) or to both national classification and IPC

| **B.** | **FIELDS SEARCHED** |
|---|---|

Minimum documentation searched (classification system followed by classification symbols)

H04B 7/06(2006.01); H04L 5/00(2006.01); H04W 24/02(2009.01); H04W 72/04(2009.01); H04W 72/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information), 버스트 패턴(burst pattern), 지시자 (indicator), 시간 인스턴스(time instance)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | US 2022-0295499 A1 (SAMSUNG ELECTRONICS CO., LTD.) 15 September 2022 (2022-09-15)<br>See paragraphs [0186], [0191], [0231], [0233], [0238], [0244], [0251], [0256], [0261] and [0265]. | 1-5,10-15 |
| A | | 6-9 |
| Y | US 2021-0067297 A1 (FARMANBAR, Hamidreza et al.) 04 March 2021 (2021-03-04)<br>See paragraphs [0066], [0084] and [0089]; and figure 3. | 1-5,10-15 |
| A | QUALCOMM INCORPORATED. CSI enhancements for high/medium UE velocities and Coherent-JT. R1-2207217, 3GPP TSG RAN WG1 #110. Toulouse, France. 12 August 2022.<br>See sections 2.1-2.5. | 1-15 |
| A | NOKIA et al. CSI enhancement for high/medium UE velocities and CJT. R1-2207546, 3GPP TSG RAN WG1 #110. Toulouse, France. 12 August 2022.<br>See sections 3.1-3.3. | 1-15 |

| ☑ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 December 2023** | **26 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/014315** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2022-0116924 A1 (QUALCOMM INCORPORATED) 14 April 2022 (2022-04-14)<br>See paragraphs [0060]-[0160]; and figures 3-10. | 1-15 |

Form PCT/ISA/210 (second sheet) (July 2022)

**INTERNATIONAL SEARCH REPORT**
Information on patent family members

International application No.

**PCT/KR2023/014315**

| Patent document cited in search report | | | Publication date (day/month/year) | Patent family member(s) | | | Publication date (day/month/year) |
|---|---|---|---|---|---|---|---|
| US | 2022-0295499 | A1 | 15 September 2022 | KR | 10-2023-0156350 | A | 14 November 2023 |
| | | | | WO | 2022-191677 | A1 | 15 September 2022 |
| US | 2021-0067297 | A1 | 04 March 2021 | CN | 114287153 | A | 05 April 2022 |
| | | | | EP | 4018740 | A1 | 29 June 2022 |
| | | | | US | 11569961 | B2 | 31 January 2023 |
| | | | | WO | 2021-037131 | A1 | 04 March 2021 |
| US | 2022-0116924 | A1 | 14 April 2022 | CN | 116325625 | A | 23 June 2023 |
| | | | | EP | 4226518 | A1 | 16 August 2023 |
| | | | | WO | 2022-076257 | A1 | 14 April 2022 |

Form PCT/ISA/210 (patent family annex) (July 2022)